# EUROPÄISCHE PATENTSCHRIFT

(11) **EP 3 853 700 B1**
(45) Veröffentlichungstag und Bekanntmachung des Hinweises auf die Patenterteilung: **12.04.2023**
(21) Anmeldenummer: 19766269.5
(22) Anmeldetag: 17.09.2019
(51) Int. Cl.: G06F 3/039, G06F 3/044, G06F 3/04883, G06K 7/08, G06K 19/067

(54) **VERFAHREN, VORRICHTUNG UND SYSTEM ZUR ERZEUGUNG EINES ZEITABHÄNGIGEN SIGNALS AUF EINEM KAPAZITIVEN FLÄCHENSENSOR**
METHOD, DEVICE AND SYSTEM FOR GENERATING A TIME-DEPENDENT SIGNAL AT A CAPACITIVE AREA SENSOR
PROCÉDÉ, DISPOSITIF ET SYSTÈME POUR GÉNÉRER UN SIGNAL VARIABLE EN FONCTION DU TEMPS SUR UN CAPTEUR SURFACIQUE CAPACITIF

(30) Priorität: 17.09.2018 EP 18000748
(43) Veröffentlichungstag der Anmeldung: 28.07.2021
(73) Patentinhaber: Prismade Labs GmbH, 09116 Chemnitz (DE)
(72) Erfinder: WEIGELT, Karin, 09116 Chemnitz (DE); THIELE, Jan, 09116 Chemnitz (DE)
(74) Vertreter: Hertin und Partner Rechts- und Patentanwälte PartG mbB
(86) Internationale Anmeldenummer: PCT/EP2019/074785
(87) Internationale Veröffentlichungsnummer: WO 2020/058233

(56) Entgegenhaltungen:
- DE-U1-202018 003 659
- US-A1- 2016 162 036

## Beschreibung

Die Erfindung betrifft eine Vorrichtung umfassend eine elektrisch leitfähige Struktur auf einem nicht-leitfähigen Substrat zur Erzeugung eines manipulationssicheren zeitabhängigen Signals auf einem kapazitiven Flächensensor, ein Verfahren zur Erzeugung eines manipulationssicheren zeitabhängigen Signals auf einem kapazitiven Flächensensor mittels einer derartigen Vorrichtung, ein System zur Erzeugung eines zeitabhängigen, manipulationssicheren Signals auf einem kapazitiven Flächensensor, sowie ein Software-Programm zur Installation auf einem einen kapazitiven Flächensensor beinhaltenden Gerät.

### Stand der Technik

Im Jahr 2010 wurden erstmalig Datenträger offenbart, die von kapazitiven Touchscreens, wie sie in marktüblichen Smartphones und Tablets enthalten sind, ausgelesen werden können. Folgender Stand der Technik hat sich auf diesem Gebiet inzwischen entwickelt:
In WO 2011 154524 A1 ist ein System zur Übertragung von Informationen von einem Informationsträger auf einen kapazitiven Flächensensor beschrieben. Der Informationsträger weist eine elektrisch leitfähige Schicht auf einem elektrisch nicht leitfähigen Substrat auf, wobei die elektrisch leitfähige Schicht als "Touch-Struktur" ausgebildet ist und mindestens einen Touch-Punkt, eine Koppelfläche und/oder eine Leiterbahn umfasst.

Die Touch-Punkte bilden die Eigenschaften von Fingerkuppen nach. Neben dem System ist die Verwendung des Systems sowie ein Verfahren zur Erfassung von Informationen beschrieben, die auf einer statischen oder dynamischen Wechselwirkung zwischen Flächensensor und Informationsträger beruht. Das Dokument offenbart die Codierung der Informationen, welche insbesondere auf den Positionen der Teilbereiche basiert.

WO 2012 072648 A1 beschreibt ein Verfahren zur Erfassung von Informationen von einem Informationsträger mit Hilfe eines kapazitiven Touchscreens. Diese Anmeldung bezieht sich inhaltlich auf ein ähnliches System wie die vorgenannte Schrift. Der beschriebene Informationsträger besteht im Wesentlichen aus zwei verschiedenen Materialien, die sich hinsichtlich Leitfähigkeit oder Dielektrizitätskoeffizient unterscheiden. Durch eine Relativbewegung zwischen Informationsträger und Touchscreen wird eine Interaktion zwischen Informationsträger und Flächensensor hervorgerufen, die auf den unterschiedlichen Materialeigenschaften basiert und ein Touchsignal erzeugt. Auch in diesem Dokument umfasst das elektrisch leitfähige Muster die Grundelemente Touch-Punkte, Koppelfläche und Leiterbahnen, wobei die Leiterbahnen die Touch-Punkte untereinander und/oder mit der Koppelfläche verbinden.

WO 2016 131963 A1 beschreibt einen kapazitiven Informationsträger, der erste und zweite elektrisch leitfähige Bereiche umfasst, die mindestens teilweise miteinander verbunden sind. Mindestens zwei Unterbereiche des ersten elektrisch leitfähigen Bereichs überdecken mindestens zwei verschiedene Schnittpunkte von Sende- und Empfangselektroden des Touchscreens.

Allen genannten Anmeldungen gemeinsam ist die Grundidee, mit Hilfe der elektrisch leitfähigen Struktur, die auf einem Informationsträger angeordnet ist, die Eigenschaften von Fingerkuppen nachzubilden und somit ein Auslesen der Informationsträger auf kapazitiven Touchscreens zu ermöglichen. Da entsprechende Touchscreens somit "zweckentfremdet" genutzt wurden, war es erforderlich, die elektrisch leitfähigen Strukturen so weit anzupassen, dass der Touchscreen entsprechende Eingaben durch die elektrisch leitfähige Struktur wahrnehmen kann und nicht "herausfiltert". Die Grundidee in den Dokumenten des Standes der Technik basiert auf einer geometrischen Codierung, bei der im Wesentlichen die Relativposition der elektrisch leitfähigen Elemente der elektrisch leitfähigen Strukturen untereinander der Codierung/Decodierung zugrunde liegt.

In WO 2018 141478 A1 ist ein Verfahren zu Erzeugung eines zeitabhängigen Signals auf einem kapazitiven Flächensensor beschrieben, dessen leitfähige Struktur aus vielen Einzelelementen besteht und das zeitabhängige Signal durch eine Relativbewegung zwischen einem Eingabemittel und dem kartenähnlichen Objekt erzeugt wird. WO 2018 141479 A1 offenbart eine Vorrichtung zur Erzeugung eines zeitabhängigen Signals auf einem kapazitiven Flächensensor. Beide Anmeldungen sehen zwingend ein Eingabemittel vor, welches mit der elektrisch leitfähigen Struktur in einem dynamischen Wirkkontakt steht. Darüber hinaus basieren die in WO 2018 141478 A1 und WO 2018 141479 A1 beschriebenen Erfindungen auf der Erzeugung eines einzelnen Touch-Signals.

US 2016/162036 A1 beschreibt eine Vorrichtung in Form einer interaktiven Karte mit einem aus kapazitiven Elementen bestehenden Muster, das u.a. die Identifikation der Karte bei Auflegen der Karte auf einen kapazitiven Flächensensor ermöglicht. Die Karte ist mit einer Liste von Musiktiteln verknüpft, wobei ein Benutzer bei aufgelegter Karte durch Bewegung eines Fingers auf der Karte von links nach rechts schnell zum nächsten Musiktitel wechseln kann.

DE 20 2018 003659 U1 beschreibt eine Vorrichtung mit einer elektrisch leitfähigen Struktur, die es erlaubt, die Vorrichtung bei Auflegen auf einen kapazitiven Flächensensor zu identifizieren wenn ein Benutzer ein Eingabemittel (z.B. Finger) entlang von elektrisch leitfähigen Eingabebereichen, die mit der elektrisch leitfähigen Struktur verbunden sind, bewegt.

Aufgabe der vorliegenden Erfindung ist es, eine Vorrichtung und ein System zur Erzeugung eines zeitabhängigen Signals auf einem kapazitiven Flächensensor bereitzustellen, dass nicht die Nachteile und Mängel des Standes der Technik aufweist. Ferner soll durch die bereitzustellende Vorrichtung ein besonders intuitiv zu bedienendes und benutzerfreundliches, interaktives Objekt bereitgestellt werden, das mit Hilfe eines kapazitiven Flächensensors verifiziert und/oder identifiziert werden kann. Ein weiteres Anliegen der vorliegenden Erfindung ist es, eine besonders manipulationssichere Vorrichtung bereitzustellen, sowie ein System und ein Verfahren, mit dem eine besonders manipulationssichere Verifizierung und/oder Identifizierung von Vorrichtungen oder den damit assoziierten Nutzern der Vorrichtung erfolgen kann.

### Beschreibung der Erfindung:

Gelöst wird die Aufgabe durch die Merkmale der unabhängigen Ansprüche. Vorteilhafte Ausgestaltungen der Erfindung sind in den abhängigen Ansprüchen beschrieben.

Erfindungsgemäß ist eine Vorrichtung zur Erzeugung eines zeitabhängigen Signals auf einem kapazitiven Flächensensor vorgesehen, wobei die Vorrichtung eine elektrisch leitfähige Struktur auf einem nicht-leitfähigen Substrat umfasst. Die Vorrichtung ist dadurch gekennzeichnet, dass die elektrisch leitfähige Struktur der Vorrichtung eine Menge an im Wesentlichen statischen Signalen auf dem kapazitiven Flächensensor erzeugt und die statischen Signale durch eine zusätzliche dynamische Eingabe mit einem Eingabemittel abgelenkt und in dynamische Signale umgewandelt werden. Es war vollkommen überraschend, dass mit der vorgeschlagenen Vorrichtung beziehungsweise dem dreidimensionalen Objekt ein besonders manipulationssicheres zeitabhängiges Signal erzeugt werden kann.

Die Erfindung betrifft daher auch ein Verfahren zur Erzeugung eines manipulationssicheren zeitabhängigen Signals auf einem kapazitiven Flächensensor gemäß Anspruch 1.

Die Bereitstellung eines derartigen manipulationssicheren Signals erlaubt vorteilhafterweise eine besonders sichere Verifizierung und/oder Identifizierung von Vorrichtungen oder den damit assoziierten Nutzern.

Der Begriff "Identifikation" bedeutet im Sinne der Erfindung bevorzugt, dass eine Vorrichtung durch den Flächensensor erkannt wird und beispielsweise einem im elektrischen Gerät, welches den Flächensensor beinhaltet, hinterlegten Datensatz zugeordnet werden kann. Dabei kann der Datensatz beispielsweise auch nicht im elektrischen Gerät direkt hinterlegt sein, aber für diesen zugänglich sein, indem er beispielsweise auf einem Server, im Internet und/oder in einer Cloud abrufbar ist. Die Erkennung der Vorrichtung durch den Flächensensor erfolgt durch die Erkennung der elektrisch leitfähigen Struktur, die auf der Vorrichtung angeordnet ist, in Verbindung mit der dynamischen Eingabe. Die elektrisch leitfähige Struktur wird insbesondere durch die Anordnung einzelner Bereiche bestimmt. Die elektrische leitfähige Struktur repräsentiert daher bevorzugt einen Identifizierungscode, welche zu Authentifizierungs- oder Verifikationszwecken genutzt werden kann.

Es war insbesondere überraschend und stellt einen wesentlichen Vorteil der Erfindung dar, dass die Menge der abgelenkten Signale sowie das durch die zusätzliche Eingabe mittels Eingabemittel erzeugte dynamische Eingabesignal in der Gesamtheit ein komplexes und besonderes manipulationssicheres Gesamtsignal erzeugen. Ein weiterer bedeutender Vorteil der Erfindung ist darin zu sehen, dass die Umwandlung von statischen in dynamische Signale auf praktisch allen Flächensensoren, die getestet wurden, durchgeführt werden kann. Damit kann die vorgeschlagene Erfindung auf allen bekannten Touchscreen- und Mobilgeräten eingesetzt werden und ist besonders universell verwendbar, was vor allem dann von Vorteil ist, wenn die Erfindung eine große Reichweite an Nutzern erreichen soll.

Im Sinne der Erfindung wird mit der zusätzlichen dynamischen Eingabe, die mit einem Eingabemittel erfolgt, ein dynamisches Eingabesignal erzeugt. Für den Begriff dynamisches Eingabesignal wird synonym der Begriff zeitabhängiges Eingabesignal oder auch Eingabesignal verwendet. Bei der Erzeugung eines Eingabesignals mit Hilfe eines Eingabemittels kann es sich zum Beispiel um die Bewegung eines Nutzerfingers entlang einer Kante des dreidimensionalen Objekts handeln, wenn das Objekt auf dem Flächensensor aufliegt. Es war vollkommen überraschend, dass die Bewegung eines Nutzerfingers, d.h. eines Eingabemittels, eine Wirkung auf das System aus Vorrichtung und Flächensensor hat, obwohl an der Kante, an der das Eingabemittel entlangbewegt wird, die elektrisch leitfähige Struktur nicht vorliegt. Mit anderen Worten ist es im Sinne der Erfindung bevorzugt, dass das Eingabemittel gleichzeitig die Vorrichtung und den Bildschirm des Flächensensors berührt, aber dass gerade kein direkter Kontakt zur elektrisch leitfähigen Struktur gegeben ist, die vorzugsweise auf einer anderen Seitenfläche des dreidimensionalen Objekts vorliegt. Insofern wird durch die Erfindung eine Wechselwirkung zwischen der elektrisch leitfähigen Struktur der Vorrichtung und dem Eingabemittel bewirkt, obwohl das Eingabemittel die elektrisch leitfähige Struktur gar nicht berührt, was sehr überraschend ist. Diese Wechselwirkung wird indirekt über das Elektrodengitter des kapazitiven Flächensensors bewirkt.

Vorzugsweise kann die zusätzliche dynamische Eingabe mittels Eingabemittel im Sinne der Erfindung auch als zweite dynamische Eingabe bezeichnet werden. Im Sinne der Erfindung bilden die Menge der dynamischen Signale und das Eingabesignal ein dynamisches Gesamtsignal, das durch das synergistische Zusammenwirken der elektrisch leitfähigen Struktur und des kapazitiven Flächensensors erhalten wird. Dieses Gesamtsignal wird im Sinne der Erfindung bevorzugt als "zeitabhängiges Signal" bezeichnet, das mit der Vorrichtung erzeugt werden kann. Die Zeitabhängigkeit äußert sich vorzugsweise darin, dass das Signal zu unterschiedlichen Zeiten unterschiedliche Ausgestaltungen oder Ausprägungen annimmt.

Im Sinne der Erfindung liegt die elektrisch leitfähige Struktur auf der Vorrichtung angeordnet vor und ist dazu eingerichtet, die Menge an im Wesentlichen statischen Signalen auf dem kapazitiven Flächensensor zu erzeugen. Eine zusätzliche dynamische Eingabe, die mit einem Eingabemittel durchgeführt wird, ist dazu eingerichtet, die statischen Signale abzulenken und in dynamische Signale umzuwandeln. Die Ablenkung äußert sich vorzugsweise dadurch, dass ein zunächst statisches Signal, das durch ein markantes Strukturelement der elektrisch leitfähigen Struktur auf dem Flächensensor hervorgerufen wird, dann zu einem dynamischen Signal wird, wenn ein Eingabemittel, das sich an der Kante der Vorrichtung entlangbewegt, auf gleicher Höhe wie das markante Strukturelement ist. Wenn das Eingabemittel auf gleicher Höhe wie das markante Strukturelement ist, stehen sowohl das Strukturelement, als auch das Eingabemittel gleichzeitig mit einer ausgewählten Sende- und/oder Leseelektrode in Wechselwirkung, was vorzugsweise die Voraussetzung für die Ablenkung des statischen Signals und seine Umwandlung in ein dynamisches Signal ist. Ein markantes Strukturelement kann beispielsweise ein leicht wahrnehmbarer und leicht zu merkender Bestandteil der elektrisch leitfähigen Struktur sein. Es handelt sich vorzugsweise um ein ausgewähltes geometrisches Element oder Bereich der Struktur, der sich bevorzugt von der restlichen Struktur abhebt.

Das dynamische Signal sieht in einem konkreten Ausführungsbeispiel der Erfindung so aus, dass das zunächst statische Signal, das von einem Strukturelement der elektrisch leitfähigen Struktur hervorgerufen wird, zu wackeln beginnt und sich insbesondere in Richtung des Eingabemittels und bevorzugt entlang des elektrisch leitfähigen Strukturelements bewegt, wenn das Eingabemittel auf gleicher Höhe wie das Strukturelement ist. Die Bezeichnung "auf gleicher Höhe" bedeutet, dass das Eingabemittel zum jeweiligen Zeitpunkt entweder mit der gleichen Zeile oder mit der gleichen Spalte des Flächensensors in Wirkkontakt steht, wie das jeweilige Strukturelement. Wenn beispielsweise das zunächst statische Signal in einem punktförmigen Signal mit ruhender Position auf dem Bildschirm des Flächensensors besteht, kann das korrespondierende dynamische Signal in einem "zitternden", d.h. sich örtlich mit der Zeit verschiebenden Signal bestehen, das insbesondere in Richtung des Eingabemittels verschoben ist. Wenn sich das Eingabemittel weiterbewegt und zu einem späteren Zeitpunkt auf Höhe eines anderen Strukturelements der elektrisch leitfähigen Struktur vorliegt, wandert das dynamische Signal zurück in seine Ausgangsposition, hört auf zu wackeln und wird wieder zu einem in sich ruhenden, statischen Signal.

In einer bevorzugten Ausführungsform des Verfahrens umfasst die dynamische Eingabe ein Führen des Eingabemittels über den Flächensensor, welches mindestens ein Überstreichen der Zeilen und/oder Spalte des Elektrodengitters umfasst, auf welchen die Strukturelemente der Vorrichtung positioniert vorliegen.

Im Sinne der Erfindung werden die statischen Signale durch das Platzieren der Vorrichtung auf dem kapazitiven Flächensensor hervorgerufen und die statischen Signale werden durch die Ausgestaltung der elektrisch leitfähigen Strukturelemente auf der Vorrichtung auf dem Flächensensor festgelegt. Im Sinne der Erfindung steht die elektrisch leitfähige Struktur mindestens teilweise mit dem kapazitiven Flächensensor in einem Wirkkontakt. Mit anderen Worten kommt es durch die Elemente der elektrisch leitfähigen Struktur in den Bereichen des Flächensensors, an denen die Elemente der elektrisch leitfähigen Struktur auf dem Bildschirm des Flächensensors aufliegen zu einer Beeinflussung der Ladungsträgerverteilung innerhalb des Elektrodengitters des Flächensensors. Diese bewusste und gezielte Beeinflussung der Ladungsträgerverteilung innerhalb des Elektrodengitters des Flächensensors wird im Sinne der Erfindung als Erzeugung von Signalen bezeichnet. Die Bereiche des Flächensensors, in deren Bereich eine Ladungsträgerverschiebung durch Elemente der elektrisch leitfähigen Struktur hervorgerufen wird, können im Sinne der Erfindung vorzugsweise auch als "aktivierte" Bereiche bezeichnet werden.

Bei der dynamischen Eingabe, die nach Platzierung der Vorrichtung auf dem kapazitiven Flächensensor vorgenommen wird und die dazu eingerichtet ist, eine Ablenkung der statischen Signale zu bewirken, wodurch dynamische Signale erhalten werden, handelt es sich im Sinne der Erfindung um die Bewegung eines Eingabemittels auf oder entlang der vorgeschlagenen Vorrichtung, wobei die elektrisch leitfähige Struktur so auf der Vorrichtung angeordnet ist, dass das Eingabemittel während der dynamischen Eingabe gerade nicht in direktem Wirkkontakt mit der elektrisch leitfähigen Struktur steht. Im Sinne der Erfindung ist die Eingabe mittels des Eingabemittels dynamisch beziehungsweise wird dynamisch durchgeführt. Als Eingabemittel können neben den Fingern auch spezielle Eingabestifte oder ähnliche Gegenstände genutzt werden. Diese sind vorzugsweise in der Lage, eine lokale Ladungsverschiebung zwischen Sende- und Empfangselektroden innerhalb des Flächensensors hervorzurufen. Diese Sende- und Empfangselektroden innerhalb des Flächensensors werden vorzugsweise als Elektrodengitter des Flächensensors bezeichnet und bilden die Zeilen und Spalten des Elektrodengitters des Flächensensors. Der Flächensensor ist vorzugsweise dafür eingerichtet, die Position des Eingabemittels zu detektieren.

Im Sinne der Erfindung bewirkt die dynamische Eingabe eine lokale Ladungsverschiebung innerhalb des Flächensensors, die die Ablenkung der statischen Signale beziehungsweise deren Umwandlung in dynamische Signale hervorruft. Es hat sich gezeigt, dass durch das vorgeschlagene Vorgehen, d.h. die Erzeugung von statischen Signalen durch eine elektrisch leitfähige Struktur und die Ablenkung und Umwandlung der statischen Signale, eine lokale Veränderung der Ladungsdichte beziehungsweise eine lokale Ladungsänderung hervorgerufen wird, die im Kontext der vorliegenden Erfindung nutzbar gemacht wird, indem durch die zusätzliche dynamische Eingabe ein überraschend manipulationssicheres Gesamtsignal erzeugt wird. Im Kontext der vorliegenden Erfindung wird eine sonst eher unerwünschte Signalablenkung ausgenutzt, um eine erhöhte Manipulationssicherheit eines Signals beziehungsweise einer Datenübertragung zu gewährleisten. Damit wendet sich die Erfindung vom bekannten Stand der Technik ab, der bisher bestrebt war, das Auftreten solcher Ablenkungsphänomene zu vermeiden. Es war insbesondere überraschend, dass die vorliegende Erfindung als ein Mittel zur Signalverstärkung genutzt werden kann.

Im Sinne der Erfindung erfolgt die zusätzliche dynamische Eingabe in Form einer Bewegung oder Geste, wobei die Bewegung oder Geste mit dem Eingabemittel durchgeführt wird. Bei der Bewegung kann es sich beispielsweise um eine Gleit-, Wisch-, Streich-, Zug- oder Schubbewegung handeln, ohne darauf beschränkt zu sein. Es ist im Kontext der vorliegenden Erfindung vorgesehen, dass die dynamische Eingabe durch eine im Wesentlichen kontinuierliche Bewegung eines Eingabemittels entlang eines Übergangsbereichs zwischen Vorrichtung und Flächensensor erfolgt, wobei der Übergangsbereich von einer Kante des vorzugsweise quaderförmigen Objekts gebildet wird. Die Kante wird dabei insbesondere von einer Unterseite und einer Seitenfläche des Objekts gebildet. Die Bewegung erfolgt vorzugsweise auf der Oberfläche des kapazitiven Flächensensors. Im Kontext der vorliegenden Erfindung steht das Eingabemittel während der Bewegung in Wirkkontakt mit dem Elektrodengitter des kapazitiven Flächensensors und überlappt nach und nach verschiedene Zeilen und/oder Spalten des Elektrodengitters, d.h. das Eingabemittel wechselwirkt mit ausgewählten Zeilen und/oder Spalten des Elektrodengitters kapazitiven Flächensensors während der Bewegung.

Es ist insbesondere vorgesehen, dass es sich bei der Vorrichtung um ein dreidimensionales Objekt handelt, das zum Beispiel quaderförmig ausgestaltet sein kann. Beispielsweise kann es sich bei dem dreidimensionalen Objekt um eine Verpackung oder eine Faltschachtel handeln. Es ist im Sinne der Erfindung insbesondere bevorzugt, dass das dreidimensionale Objekt eine Unterseite aufweist, wobei die elektrisch leitfähige Struktur vorzugsweise auf der Unterseite und einer angrenzenden Seitenfläche des dreidimensionalen Objekts angeordnet vorliegt. Es ist im Sinne der Erfindung ganz besonders bevorzugt, dass das dreidimensionale Objekt dazu eingerichtet ist, dass eine Kante des dreidimensionalen Objekts als Führung für die Eingabe mit dem Eingabemittel verwendet wird, was vorzugsweise dadurch verwirklicht wird, dass die dynamische Eingabe durch eine im Wesentlichen kontinuierliche Bewegung eines Eingabemittels entlang eines Übergangsbereichs zwischen Vorrichtung und Flächensensor erfolgt.

Der Begriff der "im Wesentlichen kontinuierlichen Bewegung" ist für den Fachmann nicht unklar, da er weiß, wie ein Eingabemittel, beispielsweise ein Finger, auf einem Smartphone beziehungsweise entlang einer Kante einer quaderförmigen Verpackung bewegt wird.

Es ist darüber hinaus insbesondere vorgesehen, dass es sich bei der Vorrichtung um ein kartenförmiges Objekt handelt. Beispielsweise kann es sich bei der Vorrichtung um eine Papier- oder Kunststoffkarte handeln. Es ist im Sinne der Erfindung insbesondere bevorzugt, dass die elektrisch leitfähige Struktur vorzugsweise auf der Unterseite, der Oberseite oder in einer Mittellage des kartenförmigen Objekts angeordnet vorliegt. Es ist im Sinne der Erfindung ganz besonders bevorzugt, dass das kartenförmige Objekt dazu eingerichtet ist, dass eine Kante des kartenförmigen Objekts als Führung für die Eingabe mit dem Eingabemittel verwendet wird, was vorzugsweise dadurch verwirklicht wird, dass die dynamische Eingabe durch eine im Wesentlichen kontinuierliche Bewegung eines Eingabemittels entlang eines Übergangsbereichs zwischen Vorrichtung und Flächensensor erfolgt. Der Begriff der "im Wesentlichen kontinuierlichen Bewegung" ist für den Fachmann nicht unklar, da er weiß, wie ein Eingabemittel, beispielsweise ein Finger, auf einem Smartphone beziehungsweise entlang einer Kante eines kartenförmigen Objekts bewegt wird.

Der Begriff "kapazitiver Flächensensor" bezeichnet im Sinne der Erfindung bevorzugt Eingabeschnittstellen von elektronischen Geräten. Eine spezielle Form des "kapazitiven Flächensensors" ist der Touchscreen, der zusätzlich zur Eingabeschnittstelle gleichzeitig als Ausgabegerät bzw. Anzeige dient. Vorrichtungen mit einem kapazitiven Flächensensor sind in der Lage, äußere Einwirkungen oder Beeinflussungen, beispielsweise Berührungen oder Kontakte auf der Oberfläche wahrzunehmen und mittels angegliederter Logik auszuwerten. Solche Flächensensoren werden beispielsweise benutzt, um Maschinen einfacher zu bedienen. Üblicherweise werden Flächensensoren in einem elektronischen Gerät bereitgestellt, wobei es sich um Smartphones, Handys, Displays, Tablet-PCs, Tablet-Notebooks, Touchpad-Geräte, Grafiktabletts, Fernseher, PDAs, MP3-Player, Trackpads und/ oder kapazitive Eingabegeräte handeln kann, ohne darauf begrenzt zu sein.

Der Begriff "Gerät beinhaltend einen Flächensensor" oder "Gerät mit einem Flächensensor" bezieht sich bevorzugt auf elektronische Geräte, wie die vorgenannten, welche in der Lage sind, die vom kapazitiven Flächensensor bereitgestellten Informationen weiter auszuwerten. In bevorzugten Ausführungsformen handelt es sich um mobile Endgeräte.

Touchscreens werden vorzugsweise auch als Tastschirme, Flächensensoren oder Sensorbildschirme bezeichnet. Ein Flächensensor muss sich nicht zwingend in Zusammenhang mit einem Display oder einem Touchscreen verwendet werden. Es kann im Sinne der Erfindung ebenso bevorzugt sein, dass der Flächensensor sichtbar oder nicht-sichtbar in Geräten, Objekten und/oder Vorrichtungen integriert vorliegt.

Flächensensoren umfassen insbesondere mindestens einen aktiven Schaltkreis, der vorzugsweise als Touch-Controller bezeichnet wird, welcher mit einer Struktur von Elektroden verbunden sein kann. Es sind im Stand der Technik Flächensensoren bekannt, deren Elektroden Gruppen von Elektroden umfassen, die sich beispielsweise in ihrer Funktion voneinander unterscheiden. Diese Elektrodenstruktur wird im Sinne der Erfindung vorzugsweise auch als "Elektrodengitter" bezeichnet. Es ist im Sinne der Erfindung bevorzugt, dass das Elektrodengitter eines Flächensensors Gruppen von Elektroden umfasst, wobei sich die Gruppen von Elektroden beispielsweise in ihrer Funktion voneinander unterscheiden. Dabei kann es sich zum Beispiel um Sende- und Empfangselektroden handeln, die in einer besonders bevorzugten Anordnung in Spalten- und Zeilenform angeordnet vorliegen können, das heißt insbesondere Knotenpunkte oder Kreuzungen bilden, an denen sich mindestens je eine Sende- und eine Empfangselektrode miteinander überkreuzen oder überlappen. Vorzugsweise sind die sich überkreuzenden Sende- und Empfangselektroden im Bereich der Knotenpunkte so zueinander ausgerichtet, dass sie miteinander im Wesentlichen 90 °-Winkel einschließen. Begriffe wie im Wesentlichen, ungefähr, etwa, ca. etc. beschreiben bevorzugt einen Toleranzbereich von weniger als ± 20%, bevorzugt weniger als ± 10 %, noch stärker bevorzugt weniger als ± 5% und insbesondere weniger als ± 1%. Angaben von im Wesentlichen, ungefähr, etwa, ca. etc. offenbaren und umfassen stets auch den exakten genannten Wert.

Im Sinne der Erfindung bildet sich zwischen den Sende- und Empfangselektroden des Flächensensors ein elektrostatisches Feld aus, das empfindlich auf Veränderungen reagiert, wie zum Beispiel durch das Inkontaktbringen der Oberfläche eines Flächensensors mit einem elektrisch leitfähigen Objekt beziehungsweise durch dessen Erdung, d.h. einem Abfluss von elektrischer Ladung.

Es ist im Sinne der Erfindung bevorzugt, dass der Touch-Controller die Elektroden vorzugsweise so ansteuert, dass sich zwischen jeweils einer oder mehreren Sendeelektroden und einer oder mehreren Empfangselektroden ein elektrisches Feld ausbildet. Dieses elektrische Feld innerhalb des Flächensensors kann durch das Platzieren der Vorrichtung und insbesondere der elektrisch leitfähigen Struktur auf der Oberfläche des Flächensensors und/oder die zusätzliche dynamische Eingabe mittels Eingabemittel verändert werden. In der Regel wird das elektrische Feld zwischen den Elektroden durch Berührung mit einem Finger auf der Oberfläche eines Flächensensors oder einem elektrisch leitfähigen Objekt lokal verringert, d.h. "Ladungen werden abgezogen". Dies kann beispielsweise dadurch geschehen, dass eine vorgeschlagene Vorrichtung gemäß der vorliegenden Erfindung auf einem Flächensensor aufgelegt oder in Kontakt gebracht wird, so dass die elektrisch leitfähige Struktur der Vorrichtung eine Menge an im Wesentlichen statischen Signalen auf dem kapazitiven Flächensensor erzeugt und die statischen Signale durch eine zusätzliche dynamische Eingabe mittels Eingabemittel abgelenkt und in dynamische Signale umgewandelt werden. Es ist im Sinne der Erfindung bevorzugt, dass sich zu unterschiedlichen Zeiten unterschiedliche Bereiche oder markante Strukturelemente der elektrisch leitfähigen Struktur auf gleicher Höhe mit dem Eingabemittel, d.h. mit der gleichen Zeile oder Spalte des Elektrodengitters in Wirkkontakt, befinden. Dabei ist die elektrisch leitfähige Struktur so auf dem dreidimensionalen Objekt angeordnet und/oder positioniert, dass das Eingabemittel während der dynamischen Eingabe nicht in direktem Wirkkontakt mit der elektrisch leitfähigen Struktur steht. Mit anderen Worten steht das Eingabemittel während der zusätzlichen dynamischen Eingabe über die Zeilen und/oder Spalten des Elektrodengitters des kapazitiven Flächensensors in indirektem Wirkkontakt mit der elektrisch leitfähigen Struktur. Der Begriff indirekter Wirkkontakt ist im Sinne der Erfindung bevorzugt so zu verstehen, dass sich die elektrisch leitfähige Struktur und das Eingabemittel nicht direkt beziehungsweise unmittelbar berühren, sondern dass die Verbindung zwischen leitfähiger Struktur und Eingabemittel mittelbar über eine Elektrodenzeile oder Elektrodenspalte des kapazitiven Flächensensors erfolgt. Mit anderen Worten bedeutet indirekter Wirkkontakt zwischen elektrisch leitfähiger Struktur und Eingabemittel, dass zu einem Zeitpunkt t ein Teil der elektrisch leitfähigen Struktur mit einer Elektrodenzeile und/oder - spalte in Wirkkontakt steht und zum gleichen Zeitpunkt t das Eingabemittel mit der gleichen Elektrodenzeile und/oder -spalte in Wirkkontakt steht ohne, dass Eingabemittel und elektrisch leitfähige Struktur in direktem Kontakt stehen.

Vorzugsweise werden durch die dynamische Eingabe unterschiedliche Bereiche der elektrisch leitfähigen Struktur in dem Sinne aktiviert, dass sie für den Flächensensor "sichtbar" werden, obwohl das Eingabemittel die elektrisch leitfähige Struktur gar nicht berührt. Dieses Sichtbarwerden beruht auf einer Kopplung zwischen dem kapazitiven Flächensensor der elektrische leitfähigen Struktur, wenn beispielsweise eine Erdung der Vorrichtung vorgenommen wird, die zu einer Änderung des elektrostatischen Feldes zwischen den Elektroden im Flächensensor und/oder zu einer messbaren Änderung der Kapazität führen kann. In der Regel wird das Signal vermindert, weil das Eingabemittel und/oder die elektrisch leitfähige Struktur einen Teil des Signals von der Sendeelektrode aufnimmt und so ein geringeres Signal an der Empfangselektrode ankommt. Die Änderung des elektrostatischen Feldes kann im Kontext der vorliegenden Erfindung beispielsweise durch die dynamische Eingabe bewirkt werden. Im Sinne der Erfindung bewirkt die dynamische Eingabe, dass die statischen Signale, die durch die elektrisch leitfähige Struktur erzeugt werden, abgelenkt und in dynamische Signale umgewandelt werden. Es ist im Sinne der Erfindung ganz besonders bevorzugt, dass die Ablenkung der statischen Signale zu einem Zeitpunkt t erfolgt, wenn die jeweiligen Bereiche oder Strukturelemente der elektrisch leitfähigen Struktur und das Eingabemittel in Wechselwirkung mit einer gleichen Zeile und/oder einer gleichen Spalte eines Elektrodengitters des kapazitiven Flächensensors stehen. Die jeweiligen Bereiche der elektrisch leitfähigen Struktur können beispielsweise einzelne markante Strukturelemente der elektrisch leitfähigen Struktur sein. Die Änderung des elektrostatischen Feldes erfolgt durch den indirekten Wirkkontakt zwischen elektrisch leitfähiger Struktur und dem Eingabemittel. Im Sinne der Erfindung wird eine Änderung des elektrostatischen Feldes durch die zusätzliche dynamische Eingabe hervorgerufen.

Die elektrisch leitfähige Struktur der Vorrichtung erzeugt auf dem kapazitiven Flächensensor eine Menge an im Wesentlichen statischen Signalen, deren Position von dem Flächensensor an der Position erkannt werden, an der sie tatsächlich auf dem Flächensensor vorliegen. Wenn jedoch eine dynamische Eingabe unter Verwendung eines Eingabemittels durch einen indirekten Wirkkontakt vorgenommen wird, so "sieht" der Flächensensor andere Positionen, d.h. der Flächensensor ordnet den statischen Signalen Positionen zu, die von den tatsächlichen Positionen, die durch die Anordnung der elektrisch leitfähigen Struktur auf der Vorrichtung festgelegt sind, abweichen. Diese Abweichung wird im Sinne der Erfindung als Ablenkung oder Verzerrung bezeichnet. Die Abweichungen treten insbesondere dann auf, wenn das Eingabemittel, mit dem die dynamische Eingabe vorgenommen wird, auf gleicher Höhe mit dem jeweiligen Strukturelement ist, was im Sinne der Erfindung bedeutet, dass das ausgewählte Strukturelement und das Eingabemittel in Wechselwirkung mit einer gleichen Zeile und/oder einer gleichen Spalte eines Elektrodengitters des kapazitiven Flächensensors stehen. Es hat sich gezeigt, dass die zunächst statischen Signale, die von den Strukturelementen auf dem Flächensensor hervorgerufen werden so lange keine dynamische Eingabe erfolgt, in Richtung des Eingabemittels gezogen werden und/oder zu wackeln beginnen, wenn die dynamische Eingabe vorgenommen wird. Das so entstehende dynamische Signal bildet sich beispielsweise entlang des Strukturelements der elektrisch leitfähigen Struktur aus, d.h. das Signal wird entlang des Strukturelements in Richtung des Eingabemittels gezogen. Dieser überraschende Effekt war weder grundsätzlich, noch in seiner Universalität, noch in seinem Ausmaß für den Fachmann zu erwarten gewesen. Flächensensoren umfassen insbesondere mindestens einen aktiven Schaltkreis, der vorzugsweise als Touch-Controller bezeichnet wird, welcher mit einer Struktur von Elektroden verbunden sein kann. Diese Elektrodenstruktur wird im Sinne der Erfindung vorzugsweise auch als "Elektrodengitter" bezeichnet. Es sind im Stand der Technik Flächensensoren bekannt, deren Elektroden Gruppen von Elektroden umfassen, die sich beispielsweise in ihrer Funktion voneinander unterscheiden. Dabei kann es sich zum Beispiel um Sende- und Empfangselektroden handeln, die in einer besonders bevorzugten Anordnung in Spalten- und Zeilenform angeordnet vorliegen können, das heißt insbesondere Knotenpunkte oder Kreuzungen bilden, an denen sich mindestens je eine Sende- und eine Empfangselektrode miteinander überkreuzen oder überlappen. Vorzugsweise sind die sich überkreuzenden Sende- und Empfangselektroden im Bereich der Knotenpunkte so zueinander ausgerichtet, dass sie miteinander im Wesentlichen einen 90°-Winkel einschließen. Zwischen den Sende- und Empfangselektroden des Flächensensors bildet sich ein elektrostatisches Feld aus, das empfindlich auf Veränderungen reagiert. Diese Veränderungen können zum Beispiel durch das Berühren der Oberfläche des Flächensensors mit einem Finger oder einem leitfähigen Objekt, durch das Berühren einer Berühr- oder Anfassfläche einer elektrisch leitfähigen Struktur, die sich zumindest teilweise auf dem Flächensensor befindet, oder insbesondere durch das Inkontaktbringen des Flächensensors mit einer elektrisch leitfähigen Struktur, die beispielsweise auf der Unterseite einer Vorrichtung angeordnet ist, hervorgerufen werden. Insbesondere führen solche Veränderungen zu Potentialänderungen innerhalb des elektrostatischen Felds, die vorzugsweise dadurch bedingt werden, dass beispielsweise durch eine Berührung einer Berührfläche einer elektrisch leitfähigen Struktur das elektrische Feld zwischen Sende- und Empfangselektroden lokal verringert wird. Eine solche Veränderung der Potentialverhältnisse wird von der Elektronik des Touch-Controllers detektiert und weiterverarbeitet.

Es ist im Sinne der Erfindung bevorzugt, dass der Touch-Controller die Elektroden vorzugsweise so ansteuert, dass zwischen jeweils einer oder mehreren Sendeelektroden und einer oder mehreren Empfangselektroden ein Signal übertragen wird, bei dem es sich um ein elektrisches Signal, beispielsweise eine Spannung, eine Stromstärke oder ein Potential(unterschied) handeln kann. Diese elektrischen Signale in einem kapazitiven Flächensensor werden vorzugsweise vom Touch-Controller ausgewertet und für das Betriebssystem des Gerätes aufbereitet. Die vom Touch-Controller an das Betriebssystem übermittelten Informationen beschreiben sogenannte einzelne "Touches" oder "Touch Events", die man sich jeweils als einzelne erkannte Berührungen vorstellen kann oder als einzelne Eingaben bezeichnen kann. Diese Touches sind bevorzugt durch die Parameter "x-Koordinate des Touches", "y-Koordinate des Touches", "Zeitstempel des Touches" und "Typ des Touches" gekennzeichnet. Die Parameter "x-und y-Koordinate" beschreiben die Position der Eingabe auf dem Touchscreen. Jedem Koordinatenpaar ist vorzugsweise ein Zeitstempel zugeordnet, der beschreibt, wann die Eingabe an der entsprechenden Stelle stattgefunden hat. Der Parameter "Typ des Touch-Events" beschreibt den detektierten Zustand der Eingabe auf dem Touchscreen. Dem Fachmann sind u.a. die Typen Touch Start, Touch Move, Touch End und Touch Cancel bekannt. Mit Hilfe der Parameter Touch Start, mindestens einem Touch Move und Touch End sowie den zugehörigen Koordinaten und Zeitstempeln kann eine Toucheingabe auf dem kapazitiven Flächensensor beschrieben werden. Es ist bevorzugt und im Stand der Technik als Multitouch-Technologie bekannt, dass mehrere Touch-Eingaben gleichzeitig ausgewertet werden können. Die projizierte-kapazitive Touchtechnologie (*projected capacitance touch technology*, PCT) ist eine beispielshafte Technologie, welche einen Multi-Touch-Bedienung erlaubt.

In bevorzugten Ausführungsformen des Verfahrens werden die Menge an Touch Events bzw. Touches mit Hilfe eines Software-Programms (,app') verarbeitet und ausgewertet. Die Auswertung kann mehrere Schritte umfassen. Vorzugsweise werden zunächst die Geräteparameter des Gerätes, welchen die Flächensensor beinhaltet, z.B. die Auflösung des Touchscreens, bestimmt. In Abhängigkeit des Gerätes wird das Signal umfassend eine Menge an Touch Events im nächsten Schritt vorzugsweise vorgefiltert und spezifische Charakteristiken des Signals verstärkt oder angepasst. Anschließend wird das Signal auf Plausibilität geprüft indem Parameter wie zeitlicher Verlauf des Signals, Geschwindigkeit und Datendichte berechnet und auf etwaige Manipulation überprüft und mit bekannten Schwellwerten verglichen werden. Es ist bevorzugt, dass anschließend diverse Kennwerte und Parameter des Signals bestimmt bzw. berechnet werden umfassend die Kennwerte Start des Signals, Ende des Signals, lokale Maxima und Minima, lokale Geschwindigkeiten des Signals, Auslenkung, Amplituden, ggf. Periodenlänge von periodischen Signalen und ggf. weitere Merkmale um das Signal in einen vergleichbaren Datensatz zu überführen. Es ist insbesondere bevorzugt, anschließend diesen Datensatz mit anderen Datensätzen zu vergleichen und einem bekannten Datensatz, der beispielsweise in einer Datenbank liegt, zuzuordnen und somit das Signal zu dekodieren. In einer weiteren bevorzugten Ausführungsform findet der Abgleich des Datensatzes unter Nutzung eines zuvor aus Aufzeichnungen erstellten Machine Learning Models (*Artificial neural networks*) statt. Es war insbesondere überraschend, dass die Nutzung eines Machine Learning Models zur Dekodierung des Signals insbesondere für komplexe Signale mit vielen verschiedenen Parametern geeignet ist.

Die Dekodierung des Signals umfasst bevorzugt eine Zuordnung der detektierten zeitabhängigen Gesamtsignals zu einer bekannten elektrisch leitfähigen Struktur bzw. einem dadurch repräsentierten Identifizierungscode. Vorteilhafterweise hat sich gezeigt, dass das mittels der dynamischen Eingabe erhaltene komplexe zeitabhängige Gesamtsignal besonders manipulationssicher ist. Eine Nachahmung des komplexen zeitabhängigen Gesamtsignales mit einer anderen elektrisch leitfähigen Struktur (also ohne Vorlage des Identifizierungscodes) ist nahezu unmöglich.

Das Verfahren ist daher in besonderem Maße für Authentifizierungsverfahren geeignet, um beispielsweise einem Nutzer bei Auflage der Vorrichtung auf einem mobilen Endgerät und erfindungsgemäßer dynamischer Eingabe Zugang zu Informationen oder einer Aktion zu gewähren.

In einer bevorzugten Ausführungsform der Erfindung ist die elektrisch leitfähige Struktur im Allgemeinen sowie die Strukturelemente der elektrisch leitfähigen Struktur im Besonderen derart gestaltet, dass die im kapazitiven Flächensensor entstehenden dynamischen Signale geeignet sind, mit Hilfe eines Algorithmus in einem Datenverarbeitungssystem auswertbar zu sein. Die Strukturelemente können verschiedenartig gestaltet sein.

In der erfindungsgemäßen Vorrichtung sind die Strukturelemente linienförmig gestaltet. Die linienförmigen Strukturelemente sind bevorzugt durch eine Breite von mindestens 0,5 mm und maximal 8 mm gekennzeichnet, besonders bevorzugt durch eine Breite von größer 1,5 mm und kleiner 5 mm. Die Länge der Strukturelemente kann bevorzugt in einem größeren Bereich variiert werden. Maßgebende Randbedingungen sind beispielsweise die Auflagefläche der Vorrichtung auf dem kapazitiven Flächensensor sowie die Größe des kapazitiven Flächensensors. In einer bevorzugten Ausführungsform beträgt die Länge der Strukturelemente mindestens 5 mm.

In besonders bevorzugten Ausführungsformen umfasst die elektrische leitfähige Struktur keine Bereiche welche einen Durchmesser von mehr als 8 mm, bevorzugt mehr als 5 mm aufweisen. Im Stand der Technik war es beispielsweise bevorzugt in Form sogenannter Touch-Points die Eigenschaften von Fingerkuppen nachzuahmen, um Touch-Events zu erzeugen. Die Erfinder haben jedoch erkannt, dass für die erfindungsgemäß vorgesehene Ablenkung der statischen Signale größerflächige Bereiche mit einem Bereich von mehr als 8 mm nicht förderlich sind: Aufgrund der relativ hohen Fläche führt die Vornahme einer zusätzlichen dynamischen Eingabe nur zu geringen Ablenkungen, welcher aufwendiger zu detektieren sind. Die beschriebene elektrisch leitfähige Struktur mit dünnen linienförmigen Strukturelementen zeichnet sich demgegenüber durch eine verbesserte Sensitivität bzw. Ablenkbarkeit durch die beschriebene dynamische Eingabe bspw. mittels eines Fingers aus.

Darüber hinaus sind linienförmige Strukturelemente durch den Winkel gekennzeichnet, in dem sie auf der Vorrichtung angeordnet sind.

In einer bevorzugten Ausführungsform sind die Strukturelemente orthogonal +/- 75° zur Kante der Vorrichtung angeordnet, entlang derer das Eingabemittel bewegt wird. Besonders bevorzugt ist die Anordnung der Strukturelemente senkrecht zur Kante der Vorrichtung, entlang derer das Eingabemittel bewegt wird, wobei eine solche Anordnung durch einen +/- 45°-Winkel gekennzeichnet ist. Der durchschnittliche Fachmann weiß, dass es sich bei den genannten Winkelwerten um Werte von ca. 75 oder 45° handelt, da der Fachmann weiß, dass Winkelangaben beispielsweise aufgrund von Messungenauigkeiten um +/- 2 bis 5° variieren beziehungsweise abweichen können. Erfindungsgemäß reichen die Strukturelemente nicht bis an die Kante der Vorrichtung heran, entlang derer das Eingabemittel bewegt wird.

Die erfindungsgemäße Vorrichtung weist mindestens eine Kante zum Führen des Eingabemittels und Vorgabe eines dynamischen Eingabesignales auf, wobei die Strukturelemente linienförmig sind und bevorzugt einen Winkel von ± 75° oder ± 45° zur Orthogonalen der Kante aufweisen. Die Strukturelemente der erfindungsgemäßen Vorrichtung weisen einen Winkel mit der Orthogonalen zwischen 5° und 75°, besonders bevorzugt zwischen 10° und 45° auf. Die Strukturelemente der erfindungsgemäßen Vorrichtung sind weder in einem Winkel von 0° noch exakt 90° zur Kante und mithin der dynamischen Eingabe orientiert. Stattdessen hat sich erwiesen, dass eine schräge Orientierung zur Kante mit Winkeln zu besonders gut detektierbaren und charakteristischen Ablenkungen führt.

In einer bevorzugten Ausführungsform der Erfindung ist die elektrisch leitfähige Struktur in sich abgeschlossen und besteht nicht aus mehreren Einzelteilen. In anderen Worten weist die elektrisch leitfähige Struktur eine nicht unterbrochene Konturlinie auf. Die Strukturelemente der elektrisch leitfähigen Struktur sind so gestaltet und angeordnet sind, dass sie mit dem kapazitiven Flächensensor in Wirkkontakt stehen können. Ist die Vorrichtung ein dreidimensionales Objekt, beispielsweise eine Verpackung oder Faltschachtel, sind in einer bevorzugten Ausführungsform die Strukturelemente auf der Unterseite der Verpackung angeordnet und über einen weiteren Teil der elektrisch leitfähigen Struktur, angeordnet auf einer Seitenfläche des dreidimensionalen Objekts, miteinander verbunden.

In einer weiteren bevorzugten Ausführungsform sind die Strukturelemente ausschließlich auf einer Seite der Vorrichtung angeordnet. Ist die Vorrichtung ein kartenförmiges Objekt, ist die gesamte elektrisch leitfähige Struktur beispielsweise auf der Unterseite oder Oberseite des kartenförmigen Objekts angeordnet.

In weiteren Ausführungsformen kann es bevorzugt sein, die elektrisch leitfähige Struktur zu unterteilen und mehrere Einzelteile der elektrisch leitfähigen Struktur auf der Vorrichtung anzuordnen. Beispielsweise kann ein Teil der elektrisch leitfähigen Struktur an einer Kante der Vorrichtung angeordnet sein und ein weiterer Teil der elektrisch leitfähigen Struktur an einer weiteren Kante der Vorrichtung angeordnet sein.

Es ist im Sinne der Erfindung ganz besonders bevorzugt, dass die Vorrichtung von einem kartenförmigen Objekt gebildet wird. Es ist ferner bevorzugt, dass das kartenförmige Objekt verkürzend als "Objekt" bezeichnet wird. Vorzugsweise handelt es sich bei dem kartenförmigen Objekt um ein quaderförmiges Gebilde, welches durch eine geringe Höhe des Objekts im Vergleich zu Breite und Länge des Objekts gekennzeichnet ist. Die Seite des Objekts, die dem Flächensensor zugewandt ist, wird vorzugsweise als Unterseite des Objekts bezeichnet, während die Seite des Objekts, die der Unterseite gegenüber liegt, als Oberseite des Objekts bezeichnet wird.

Es ist im Sinne der Erfindung ganz besonders bevorzugt, dass die Vorrichtung beziehungsweise das dreidimensionale Objekt von einer Verpackung oder einer Faltschachtel gebildet wird. Es ist ferner bevorzugt, dass das dreidimensionale Objekt verkürzend als "Objekt" bezeichnet wird. Vorzugsweise handelt es sich bei dem Objekt um ein quaderförmiges Gebilde, das insbesondere sechs Seitenflächen aufweist. Die Seitenfläche des Objekts, die dem Flächensensor zugewandt ist, wird vorzugsweise als Unterseite des Objekts bezeichnet, während die Seitenfläche des Objekts, die der Unterseite gegenüber liegt, als Oberseite des Objekts bezeichnet wird. Die übrigen vier Seitenflächen werden vorzugsweise als Seitenflächen bezeichnet.

Es ist im Sinne der Erfindung bevorzugt, dass die Vorrichtung auf einem elektrisch nicht-leitfähigen Substratmaterial basiert. Vorzugsweise werden Papiere, Kartonagen, Faltschachtelkarton und/oder Aufkleber, Etiketten, Folienmaterialien, Laminate und/oder weitere Materialien als Substratmaterial verwendet ohne darauf beschränkt zu sein.

Es ist im Sinne der Erfindung bevorzugt, dass die elektrisch leitfähige Struktur mittels Folientransferverfahren, zum Beispiel Kaltfolientransfer, Heißprägen und/oder Thermotransfer auf ein Substratmaterial aufgebracht werden, ohne auf diese Aufbringungsverfahren beschränkt zu sein. Insbesondere können zur Herstellung der elektrisch leitfähigen Struktur auf dem nicht-leitfähigen Substrat Druckverfahren, wie zum Beispiel Offsetdruck, Tiefdruck, Flexodruck, Siebdruck und/oder Inkjetmethoden verwendet werden ohne darauf beschränkt zu sein. Geeignete elektrisch leitfähige Farben umfassen Materialien, die beispielsweise auf Metallpartikeln, Nanopartikeln, Kohlenstoff, Graphen und/oder elektrisch leitfähigen Polymeren basieren, ohne auf diese Materialien beschränkt zu sein. Es kann im Sinne der Erfindung auch bevorzugt sein, die elektrisch leitfähige Struktur durch mindestens eine weitere Schicht abzudecken, wobei diese Schicht ein papier- oder folienbasiertes Laminatmaterial oder mindestens eine Lack- /Farbschicht sein kann. Diese Schicht kann optisch transparent oder opak ausgebildet sein.

Es ist im Sinne der Erfindung bevorzugt, dass die elektrisch leitfähige Struktur direkt auf das Substratmaterial der Vorrichtung appliziert wird, d.h. beispielsweise direkt auf den Faltschachtelkarton auf die Innen- oder Außenseite appliziert wird. Es ist ferner in einer weiteren Ausführungsform bevorzugt, die elektrisch leitfähige Struktur auf ein Aufkleber- oder Labelmaterial zu applizieren und diesen Aufkleber auf der Vorrichtung anzubringen. In einer weiteren Ausführungsform ist ein solcher Aufkleber so als Erstöffnungsschutz bzw. Manipulationsschutz auf der Verpackung appliziert, dass beim ersten Offnen das Aufklebermaterial und somit auch die elektrisch leitfähige Struktur beispielsweise an einer Kante unterbrochen wird.

Ein Merkmal klassischer konventioneller Druckverfahren ist die einfache und schnelle Vervielfältigung eines Motivs, indem das zu druckende Motiv auf eine Druckform, zum Beispiel Tiefdruckzylinder oder Offsetdruckplatte, aufgebracht wird und anschließend mehrfach und mit hoher Geschwindigkeit vervielfältigt werden kann. Konventionelle Druckverfahren sind nicht dafür geeignet, individualisierte Inhalte herzustellen, da die Druckformherstellung einen signifikanten Anteil an den Gesamtherstellungskosten darstellt. Somit können nur größere Auflagen eines Druckprodukts wirtschaftlich hergestellt werden. Im grafischen Druck existieren für die Herstellung kleiner Auflagen sowie individualisierter Produkte Digitaldruckverfahren, mit denen individuelle Inhalte wirtschaftlich gedruckt werden können. Diese Druckverfahren umfassen beispielsweise Elektrofotografie, Laserdruck oder Inkjetdruck. Es ist zudem möglich, mittels Verfahrenskombinationen von konventionellen Druckverfahren und additiven oder subtraktiven Verfahren individualisierte elektrische leitfähige Strukturen herzustellen.

Die Gesamtheit der abweichenden Positionen, die den statischen Signalen zugeordnet werden, wird im Sinne der Erfindung als abgelenktes Signal bezeichnet. Die Zuordnung von Positionen, die von einer tatsächlichen Position auf dem dreidimensionalen Objekt abweichen, kann im Sinne der Erfindung auch als Umwandlung in ein dynamisches Signal bezeichnet werden. Es kann im Sinne der Erfindung bevorzugt sein, dass eine Interaktion von Punkten beziehungsweise Positionen stattfindet. Es ist im Sinne der Erfindung besonders bevorzugt, dass die statischen Signale im Wesentlichen gleichzeitig erzeugt werden, wenn die Vorrichtung auf dem Flächensensor platziert wird, und die statischen Signale durch die dynamische Eingabe zeitlich versetzt abgelenkt werden.

Die Erfindung betrifft auch eine Vorrichtung umfassend eine elektrisch leitfähige Struktur auf einem nicht-leitfähigen Substrat zur Erzeugung einer Menge an Signalen auf einem kapazitiven Flächensensor, wobei die Signale durch eine zweite dynamische Eingabe mit einem Eingabemittel auf dem kapazitiven Flächensensor abgelenkt werden. Es ist im Sinne der Erfindung bevorzugt, dass die Ablenkung der statischen Signale zu einem Zeitpunkt t erfolgt, wenn die jeweiligen Bereiche der elektrisch leitfähigen Struktur und das Eingabemittel in Wechselwirkung mit einer gleichen Zeile und/oder einer gleichen Spalte eines Elektrodengitters des kapazitiven Flächensensors stehen. Im Sinne der Erfindung entspricht die zweite dynamische Eingabe der zusätzlichen dynamischen Eingabe, mit der das Eingabesignal erhalten wird. Im Sinne der Erfindung erfolgt die Ablenkung der statischen Signale durch die dynamische Eingabe so, dass eine Wirkung und/oder Positionen der statischen Signale auf den/dem Flächensensor durch die dynamische Eingabe verändert wird, wodurch dynamische Signale erhalten werden. Im Sinne der Erfindung wird die entstehende Ablenkung für die Umwandlung der statischen Signale in dynamische Signale gezielt genutzt um so beispielsweise die Datenkapazität und die Fälschungssicherheit der Vorrichtung zu erhöhen.

Eine dynamische Eingabe kann auf einem Flächensensor dargestellt werden, beispielsweise in einem Koordinatensystem mit zwei Achsen, die entsprechend der mathematischen Gepflogenheiten mit x-Achse für die horizontale Achse und y-Achse für die vertikale Achse bezeichnet werden. Eine Veränderung der x-Koordinate entspricht somit bevorzugt einer Verschiebung eines Punktes nach rechts oder links, während eine Veränderung der y-Koordinate eines Punkts einer Verschiebung nach oben oder unten entspricht. Bei der Bewegung eines Nutzerfingers über den Bildschirm eines Flächensensors fallen die tatsächliche Bewegung und das vom Flächensensor detektierte Signale im Wesentlichen zusammen.

Wenn, wie oben beschrieben, gedanklich ein xy-Koordinatensystem auf den Bildschirm eines Flächensensors gelegt wird, ergeben sich für die tatsächlichen Positionen der statischen Signale und die vom Flächensensor detektierten, abgelenkten Positionen unterschiedliche Verläufe in Bezug auf die Zeit, wobei die Abweichungen insbesondere auf die dynamische Eingabe zurückzuführen sind. Die Erfinder haben erkannt, dass bei Vornahme einer dynamischen Eingabe eine Ablenkung der statischen Signale erhalten wird, die in dem oben beschriebenen gedanklich xy-Koordinatensystem dargestellt werden kann.

Es ist im Sinne der Erfindung ganz besonders bevorzugt, dass die elektrisch leitfähige Struktur eine Richtung und eine Intensität der Ablenkung der Signale festlegt. Mit anderen Worten ist die Ausgestaltung der elektrisch leitfähigen Struktur dazu eingerichtet, die Richtung und die Intensität der Ablenkung der Signale festzulegen. Die Begriff "Richtung der Ablenkung" beschreibt im Sinne der Erfindung bevorzugt die Orientierung zweier Raumpositionen zueinander, und zwar bevorzugt der Position eines statischen Signals, wie es ein Flächensensor ohne zusätzliche dynamische Eingabe "sieht", und der Position des statischen Signals, während oder nachdem eine zusätzliche dynamische Eingabe vorgenommen wird. Dieses zweite Signal kann im Sinne der Erfindung als abgelenktes Signal bezeichnet werden. Es ist im Sinne der Erfindung bevorzugt, dass durch die elektrisch leitfähige Struktur eine Menge, d.h. eine Vielzahl, an statischen Signalen erzeugt und durch eine dynamische Eingabe abgelenkt und umgewandelt wird. Wenn in dem oben beschriebenen gedanklichen Koordinatensystem die ursprüngliche Position eines statischen Signals durch das Koordinatenpaar (x1/y1) beschrieben wird und das abgelenktes Signal durch das Koordinatenpaar (x2/y2), kann die Ablenkung beispielsweise als Vektor beschrieben werden, dessen Koordinaten sich als Differenz der Positionskoordinaten darstellen lassen. Die x-Koordinate des Ablenkungsvektors kann dann beispielsweise als x = x2 - x1 berechnet werden und die y-Koordinate als y = y2 - y1. Je nachdem, ob die erhaltenen Werte positiv oder negativ, d.h. größer oder kleiner als null sind, handelt es sich um eine Ablenkung in Richtung "rechts-oben", "rechts-unten", "links-oben" oder "links-unten", wobei bei einer Ablenkung in Richtung rechts-oben, beispielsweise gilt: *x, y* > 0.

Die Intensität der Ablenkung stellt im Sinne der Erfindung ein Maß für die Größe der Ablenkung dar. Insbesondere können Ablenkungen anhand der x- und y-Koordinate der Ablenkung miteinander verglichen werden. Wenn eine erste Ablenkung eine größere x- und y-Koordinate aufweist als eine zweite Ablenkung, so ist es im Sinne der Erfindung bevorzugt, dass die erste Ablenkung eine größere Intensität aufweist als die zweite Ablenkung.

Die Ablenkung kann neben der Intensität auch durch die Geschwindigkeit der Ablenkung charakterisiert werden. Mit Hilfe der Koordinatenpaare (x1/y1) vor der Ablenkung und (x2/y2) nach vollzogener Ablenkung sowie den dazugehörigen Zeitstempeln t1 und t2 kann die Geschwindigkeit der Ablenkung ermittelt werden. Diese Geschwindigkeit kann ein charakteristischer Parameter der sein, der durch die Geometrie des Strukturelements beeinflusst wird.

Es ist im Sinne der Erfindung bevorzugt, dass die elektrisch leitfähige Struktur Bereiche oder Strukturelemente umfasst, wobei jeder Bereich auf dem kapazitiven Flächensensor jeweils ein statisches Signal erzeugt, wobei die zunächst statischen Signale im Wesentlichen durch Zeitstempelinformationen sowie eine Menge an Koordinatenpaaren gekennzeichnet sind. Mit anderen Worten kann es bevorzugt sein, dass jeder Bereich oder jedes Strukturelement der elektrisch leitfähigen Struktur dazu eingerichtet ist, auf dem kapazitiven Flächensensor jeweils ein bevorzugt statisches Signal zu erzeugen.

Der Begriff "Zeitstempelinformation" kann im Sinne der Erfindung so verstanden werden, dass jedem Koordinatenpunkt (x1, y1) und jeder Ablenkung (*x*/*y*) ein zeitlicher Verlauf zuordnet werden kann, so dass die Koordinatenpunkte und die Ablenkungen beziehungsweise ihre Koordinaten als Funktionen der Zeit beschrieben werden können: (x1(t), y1(t)) beziehungsweise (*x(t)*/*y(t)*)*.* Der Begriff "Zeitstempelinformation" umfasst somit im Sinne der Erfindung eine Menge aus mindestens drei Informationen, nämlich eine x- Koordinate, eine y-Koordinate und einen Zeitpunkt t, wobei die x- Koordinate und die y-Koordinate eines dynamischen Signals oder einer Ablenkung zu unterschiedlichen Zeiten t1 und t2 unterschiedliche Werte annehmen kann: x1=x(t1) und x2=x(t2) beziehungsweise y1=y(t1) und y2=y(t2).

Im Sinne der Erfindung ist die Vorrichtung als Führung für die Bewegung des Eingabemittels entlang einer Kante der Vorrichtung geeignet. Mit anderen Worten wird die Vorrichtung dafür genutzt als Führung für die Bewegung des Eingabemittels entlang einer Kante der Vorrichtung verwendet zu werden. Es kann im Sinne der Erfindung beispielsweise bevorzugt sein, die Vorrichtung, bei der es sich beispielsweise um eine quaderförmige Verpackung handeln kann, auf einen kapazitiven Flächensensor zu stellen und mit einem Finger, der beispielsweise als Eingabemittel im Sinne der Erfindung betrachtet werden kann, an einem Übergang zwischen Verpackung und Flächensensor entlang zu streichen. Dieser Übergangsbereich kann beispielsweise von dem 90 °-Winkel gebildet werden, den die Verpackung mit dem Flächensensor vorzugsweise einschließt, wenn die Verpackung auf dem Flächensensor angeordnet ist. Durch die Bewegung des Fingers, d.h. des Eingabemittels, entlang des Übergangsbereich werden vorzugsweise sowohl die Verpackung, als auch der Flächensensor gleichzeitig berührt, nicht aber die elektrisch leitfähige Struktur. Im Sinne der Erfindung berührt das Eingabemittel während der Vornahme der dynamischen Eingabe die elektrisch leitfähige Struktur nicht direkt, wobei ein indirekter Kontakt zwischen Eingabemittel und elektrisch leitfähiger Struktur besteht. Der indirekte Kontakt zwischen Eingabemittel und elektrisch leitfähiger Struktur wird über die Sende- und Empfangselektroden des Elektrodengitters des kapazitiven Flächensensors hergestellt, wobei sowohl zwischen Eingabemittel und Elektrodengitter des Flächensensors als auch zwischen elektrisch leitfähiger Struktur und Elektrodengitter eine kapazitive Kopplung besteht.

In einer bevorzugten Ausführungsform der Erfindung erfolgt die Vornahme einer dynamischen Eingabe mittels zwei oder mehreren Eingabemitteln. Beispielsweise können zwei Finger verwandt werden, welche gleichzeitig entlang zweier Kanten der Vorrichtung geführt werden. Hierdurch kann ein höherer Grad an Komplexität des Gesamtsignals erzielt werden, wodurch eine noch präzisere Identifikation ermöglicht wird.

In einem weiteren Aspekt betrifft die Erfindung ein System zur Erzeugung eines manipulationssicheren zeitabhängigen Signals auf einem kapazitiven Flächensensor gemäß Anspruch 12.

Im Sinne der Erfindung steht die elektrisch leitfähige Struktur beziehungsweise das Eingabemittel mit dem kapazitiven Flächensensor in Wirkkontakt. Der Begriff "Wirkkontakt" ist im Sinne der Erfindung so zu verstehen, dass die genannten Gegenstände, zum Beispiel elektrisch leitfähige Struktur oder Eingabemittel, eine Wirkung auf den Flächensensor haben in dem Sinne, dass es zu Veränderungen des elektrostatischen Feldes kommt, das zwischen den Sende- und Leseelektroden des Elektrodengitters des Flächensensors ausgebildet vorliegt. Beispielsweise wird durch Auflegen der Vorrichtung auf den Flächensensor eine Menge an statischen Signalen erzeugt. Mit anderen Worten führt ein Wirkkontakt beispielsweise zwischen der elektrisch leitfähigen Struktur und dem Flächensensor beziehungsweise zwischen dem Eingabemittel und dem Flächensensor vorteilhafterweise dazu, dass sich die Ladungsträgerverteilung in dem Flächensensor lokal verändert, wobei diese Änderung der Ladungsträgerverteilung durch eine Logik beziehungsweise eine Auswertungseinheit im Flächensensor ausgewertet werden kann, um beispielsweise eine Ablenkung von Signalpositionen oder Ablenkungen generell zu bestimmen und/oder zu detektieren. Die Auswerteeinheit im Flächensensor wird in mobilen Endgeräten bevorzugt als Touch-Controller bezeichnet.

Im Sinne der Erfindung werden die abgelenkten zeitabhängigen Signale und das dynamische Eingabesignal zusammengefasst als zeitabhängiges Gesamtsignal bezeichnet. Das zeitabhängige Gesamtsignal wird im Flächensensor beinhaltenden Gerät ausgewertet und beispielsweise einem Datensatz in einer Datenbank zugeordnet.

Im Sinne der Erfindung werden die statischen Signale durch die Ausgestaltung der elektrisch leitfähigen Struktur auf der Vorrichtung von dieser auf dem Flächensensor hervorgerufen, wenn die Vorrichtung auf dem Flächensensor aufliegt. Die Elemente der elektrisch leitfähigen Struktur beeinflussen in den Bereichen des Flächensensors, an denen sie auf dem Bildschirm des Flächensensors aufliegen die Ladungsträgerverteilung innerhalb des Elektrodengitters des Flächensensors. Durch diese bewusste und gezielte Beeinflussung der Ladungsträgerverteilung innerhalb des Elektrodengitters werden die statischen Signale im Kontext der vorliegenden Erfindung generiert. Die Bereiche des Flächensensors, in deren Bereich eine Ladungsträgerverschiebung durch Elemente der elektrisch leitfähigen Struktur hervorgerufen wird, können im Sinne der Erfindung vorzugsweise auch als "aktivierte" Bereiche bezeichnet werden. Die erzeugten Signale sind statisch, da die Vorrichtung mit der elektrisch leitfähigen Struktur lediglich auf den Flächensensor aufgelegt, aber nicht bewegt wird. Insofern besteht zwischen der Vorrichtung und dem Flächensensor durch das Auflegen ein statischer Wirkkontakt, während ein dynamischer Wirckontakt beziehungsweise eine dynamische Eingabe vorzugsweise eine Relativbewegung zwischen den beteiligen Kontaktpartnern voraussetzt. Im Sinne der Erfindung ist die dynamische Eingabe dynamisch ausgebildet, da sie in Form einer Bewegung oder einer Geste vorgenommen wird. Mit anderen Worten wird das Eingabemittel auf dem Bildschirm des Flächensensors bewegt oder eine Geste damit ausgeführt.

Es ist im Sinne der Erfindung bevorzugt, dass sich die aktivierten Bereiche, die vorzugsweise den Positionen der statischen Signale entsprechen, durch die dynamische Eingabe verschieben. Diese Verschiebung manifestiert sich durch eine geänderte Ladungsträgerverteilung innerhalb des Flächensensors beziehungsweise seines Elektrodengitters; sie wird auch als Ablenkung bezeichnet und führt vorteilhafterweise zu einer Umwandlung der vormals statischen Signale in dynamische Signale, da sich die Signale, die von der elektrisch leitfähigen Struktur während der dynamischen Eingabe hervorgerufen werden, beispielsweise wackeln oder in Richtung des Eingabemittels verschoben sind. Es ist im Sinne der Erfindung bevorzugt, dass die Ablenkung der statischen Signale entlang der Strukturelemente der elektrisch leitfähigen Struktur erfolgt. Es ist im Sinne der Erfindung bevorzugt, dass die Ablenkung der statischen Signale zu einem Zeitpunkt t erfolgt, an dem die Bereiche beziehungsweise Elemente der elektrisch leitfähigen Struktur sowie das Eingabemittel mit gleichen Spalten und/oder Zeilen des Elektrodengitters des Flächensensors in Wechselwirkung stehen. Dies wird im Sinne der Erfindung vorzugsweise mit der Formulierung umschrieben, dass der jeweilige Bereich der elektrisch leitfähigen Struktur und das Eingabemittel auf gleicher Höhe sind. Mit anderen Worten kommt es zu der Ablenkung, wenn Elemente der elektrisch leitfähigen Struktur sowie das Eingabemittel mit gleichen Sendeelektroden und/oder Leseelektroden des Elektrodengitters in Wechselwirkung stehen. Dies bedeutet im Sinne der Erfindung bevorzugt, dass es zu einer Ablenkung und Umwandlung der Menge an statischen Signalen kommt, wenn die elektrisch leitfähige Struktur, beziehungsweise ein Teil davon, und das Eingabemittel gleichzeitig mit einer Sendeelektrode und/oder mit einer Leseelektrode in Kontakt, d.h. Wechselwirkung, steht.

Dies kann durch folgendes Beispiel verdeutlicht werden: Eine vorgeschlagene Vorrichtung umfasst eine elektrisch leitfähige Struktur mit beispielsweise drei markanten Strukturelementen. Diese Strukturelemente der elektrisch leitfähigen Struktur wechselwirken mit dem Elektrodengitter des Flächensensors, wenn die Vorrichtung auf den Flächensensor aufgelegt wird. Die entsprechenden Bereiche auf dem Flächensensor werden aktiviert, wobei die Positionen dieser aktivierten Bereiche mit den Positionen bzw. Flächenschwerpunkten der Strukturelemente der elektrisch leitfähigen Struktur korrespondieren. Es wird nun mit dem Eingabemittel, beispielsweise einem menschlichen Finger, eine Bewegung auf dem Flächensensor durchgeführt, wobei die elektrisch leitfähige Struktur so auf der Vorrichtung positioniert ist, dass das Eingabemittel während der dynamischen Eingabe nicht in direktem Wirkkontakt mit der elektrisch leitfähigen Struktur steht. Insbesondere kann mit einem Finger an der Kante der Vorrichtung, die auf dem Flächensensor aufliegt, entlanggefahren werden, wobei der Finger dabei nicht die elektrisch leitfähige Struktur berührt. Mit anderen Worten steht die elektrisch leitfähige Struktur mit dem Eingabemittel während der dynamischen Eingabe über die Zeilen und/oder Spalten des Elektrodengitters des Elektrodengitters in indirektem Wirkkontakt mit der elektrisch leitfähigen Struktur. Wenn nun die elektrisch leitfähige Struktur, beziehungsweise ein Teil davon, beispielsweise ein Strukturelement, und das Eingabemittel gleichzeitig mit einer Sendeelektrode und/oder mit einer Leseelektrode in Wechselwirkung steht, kommt es zu einer Ablenkung desjenigen statischen Signals, das durch das entsprechende Strukturelement der elektrisch leitfähigen Struktur erzeugt wird. Dadurch können nacheinander verschiedene statische Signale abgelenkt und umgewandelt werden, wobei die Abfolge der Ablenkungen durch die dynamische Eingabe beziehungsweise die tangierten Sende- und Leseelektroden bestimmt wird.

Das erfindungsgemäße System ist bevorzugt dafür eingerichtet die beschriebene Ablenkung der statischen Signale bzw. die Umwandlung in dynamische Signale zu detektieren und auszuwerten, um die aufgelegte elektrische Struktur zu identifizieren bzw. zu verifizieren.

In einer bevorzugten Ausführungsform weist das System eine Datenverarbeitungsvorrichtung auf, welche dazu eingerichtet ist, das zeitabhängige Gesamtsignal auszuwerten, wobei auf der Datenverarbeitungsvorrichtung bevorzugt eine Software (,app') installiert vorliegt, welche Befehle umfasst, dynamische Kennwerte des zeitabhängiges Gesamtsignals zu bestimmen und mit Referenzdaten zu vergleichen.

In einer bevorzugten Ausführungsform weist das den Flächensensor beinhaltende Gerät eine Datenverarbeitungsvorrichtung auf, welche dazu eingerichtet ist, das zeitabhängige Gesamtsignal auszuwerten, wobei auf der Datenverarbeitungsvorrichtung bevorzugt eine Software ('app') installiert vorliegt, welche Befehle umfasst, dynamische Kennwerte des zeitabhängiges Gesamtsignals zu bestimmen und mit Referenzdaten zu vergleichen.

In einer weiteren bevorzugten Ausführungsform wird die Software zumindest teilweise in Form eines Cloud-Services bzw. Internet-Dienstes bereitgestellt, wobei das Gerät die Touchdaten bzw. Touch-Events über das Internet an eine Applikation in der Cloud übermittelt. Auch in diesem Fall liegt eine Software (,app') auf einer Datenverarbeitungsvorrichtung vor, welche Befehle umfasst, dynamische Kennwerte des zeitabhängiges Gesamtsignals zu bestimmen und mit Referenzdaten zu vergleichen. Die auf der Datenverarbeitungsvorrichtung des Gerätes installierte Software führt jedoch nicht alle rechenintensive Schritte selbstständig auf dem Gerät durch. Stattdessen werden die Daten über das zeitabhängige Gesamtsignal bzw. die Menge der Touch-Events an eine Software-Applikation in einer Cloud (mit einer externen Datenverarbeitungsvorrichtung) zur Bestimmung dynamischer Kennwerte und deren Vergleich mit Referenzdaten übermittelt. Die Software als Cloud-Dienst, welche bevorzugt Befehle umfasst dynamische Kennwerte des zeitabhängigen Gesamtsignals zu bestimmen und mit Referenzdaten zu vergleichen, verarbeitet das dynamische Gesamtsignal in Form einer Menge an Touch-Events und sendet das Ergebnis zurück an das den Flächensensor umfassenden Gerät bzw. an die auf diesem installierte Software. Die Software auf dem Gerät kann bevorzugt die Ergebnisse weiterverarbeiten und beispielsweise deren Anzeige steuern. Wenn im Folgenden bevorzugte Merkmale der Software beschrieben werden, erkennt der Fachmann, dass diese bevorzugt gleichermaßen für eine Software gelten, welche die Schritte vollständig auf dem Gerät durchführt, als auch für eine Software, welche einige (bevorzugt rechenintensive) Schritte, wie die Bestimmung dynamischer Kennwerte und deren Vergleich mit Referenzdaten, auf eine externe Datenverarbeitungsvorrichtung eines Cloud-Service ausgelagert hat. Ein Fachmann erkennt, dass die vorgesehene Auswertung des zeitabhängigen Gesamtsignals als einheitliches Konzept zu verstehen ist, unabhängig davon, welche Schritte des Algorithmus auf dem Gerät selbst oder durch eine externe Datenverarbeitungsvorrichtung auf einer Cloud durchgeführt werden. In bevorzugten Ausführungsformen kann beispielsweise auch eine Bestimmung der dynamischen Kennwerte des zeitabhängigen Gesamtsignals durch die Software auf dem Gerät erfolgen und nur der Vergleich der dynamischen Kennwerte mit Referenzdaten ausgelagert durch einen Cloud-Dienst erfolgen.

Bei dem Flächensensor beinhaltenden Gerät handelt es sich um elektronische Geräte, welche in der Lage sind die vom kapazitiven Flächensensor bereitgestellten Informationen weiter auszuwerten. Der kapazitive Flächensensor bzw. das Gerät weist bevorzugt einen aktiven Schaltkreis, auch Touch-Controller genannt, auf, welcher wie obig beschrieben eine Auswertung von Berührungssignalen auf dem Flächensensor erlaubt. Mittels des Touch-Controller und einem auf dem elektronischen Gerät bereitgestellten Betriebssystem wird das zeitabhängige Gesamtsignal bevorzugt als eine Menge von Touch-Events aufbereitet.

Ein Touch-Event bezeichnet vorzugsweise ein Softwareereignis, das vom Betriebssystem des Gerätes mit dem kapazitiven Flächensensor bereitgestellt wird, wenn sich ein vom Touch-Controller detektierter elektronischer Parameter ändert.

Ein Betriebssystem bezieht sich vorzugsweise auf die Software, die mit der Hardware des Geräts, insbesondere dem kapazitiven Flächensensor bzw. dem Touch-Controller, kommuniziert und es anderen Programmen, wie beispielsweise der Software (,app`) ermöglicht, auf dem Gerät zu laufen. Beispiele für Betriebssysteme für Geräte mit kapazitivem Oberflächensensor sind Apples iOS für iPhone, iPad und iPod Touch oder Android für den Betrieb verschiedener Smartphones, Tablet-Computer oder Media-Player. Betriebssysteme steuern und überwachen die Hardware des Gerätes, insbesondere den kapazitiven Flächensensor oder einen Touch-Controller. Vorzugsweise stellen Betriebssysteme für das beanspruchte System eine Menge von Touch-Events zur Verfügung, welche das zeitabhängige Gesamtsignal reflektieren.

Im Falle einer kontinuierlichen dynamische Eingabe kann diese beispielsweise als ein Touch-Start, ein Touch-Move und Touch-End erkannt werden, wobei anhand der x bzw. y Koordinaten und der Zeitstempel der Touches der zeitliche Ablauf der dynamischen Eingabe nachvollzogen werden kann.

Das Auflegen der Vorrichtung mit einer elektrisch leitfähigen Struktur mit Strukturelementen erzeugt statische Signale auf dem Flächensensor, welche ebenfalls als eine Menge von Touch-Events von dem Gerät erkannt werden. Je nach Ausgestaltung der Strukturelemente können diese eine oder mehrere statische Signale bzw. Touch-Events generieren. Bevor die dynamische Eingabe erfolgt, werden sich die x bzw. y-Koordinate der Touches der statischen Signale nur geringfügig ändern. Geringfügige Änderungen können bevorzugt durch Schwankungen in der Detektion oder der Positionierung der Vorrichtung auf dem Flächensensor auftreten.

Wie obig beschrieben, bewirkt eine dynamische Eingabe, beispielsweise mittels eines Fingers, eine zeitabhängige Ablenkung der statischen Signale. Die dynamischen Signale werden von dem Gerät bevorzugt ebenfalls als Touch-Events detektiert, wobei beispielweise die Ablenkung eines bereits erzeugte Touches als eine zeitliche Änderungen der x,y-Koordinaten bestimmt werden kann.

Die Aufbereitung des zeitabhängigen Gesamtsignales, also sowohl der dynamischen Eingabe als auch der ablenkten Signale der Strukturelemente, erfolgt bevorzugt durch das Betriebssystem bzw. den Touch-Controller des elektronischen Gerätes, wie beispielsweise eines Smartphones.

Die auf der Datenverarbeitungsvorrichtung installierte Software (,app') wertet das zeitabhängige Gesamtsignal bevorzugt anhand der detektierten Menge an Touch-Events aus.

Die Datenverarbeitungsvorrichtung ist bevorzugt eine Einheit, welche zum Empfang, Senden, Speichern und/oder Verarbeiten von Daten, bevorzugt Touch-Events geeignet und konfiguriert ist. Die Datenverarbeitungseinheit umfasst bevorzugt einen integrierten Schaltkreis, einen Prozessor, einen Prozessorchip, einen Mikroprozessor und/oder Mikrokontroller zur Verarbeitung von Daten, sowie einen Datenspeicher, beispielsweise eine Festplatte, einen *random access memory* (RAM), einen *read-only memory* (ROM) oder auch einen *flash memory* zur Speicherung der Daten. In kommerziell erhältlichen elektronischen Geräten mit Flächensensoren, wie beispielsweise den mobilen Endgeräten oder smart devices, liegen entsprechende Datenverarbeitungsvorrichtungen vor. Die Software (,app') kann in jeder Programmiersprache oder modellbasierten Entwicklungsumgebung geschrieben werden, wie beispielsweise C/C++, C#, Objective-C, Java, Basic/VisualBasic oder Kotlin. Der Computercode kann Unterprogramme umfassen, die in einer proprietären Computersprache geschrieben sind, die spezifisch für das Auslesen oder die Steuerung oder einer anderen Hardwarekomponente des Gerätes vorgesehen sind.

Die erfindungsgemäße Software bestimmt dynamische Kennwerte des zeitabhängiges Gesamtsignals (bevorzugt in Form einer Menge von Touch-Events), um diese mit Schwellwerten und/oder Referenzdatensätzen zu vergleichen.

Bei den dynamischen Kennwerten kann es sich beispielsweise um Start, Ende, lokale Maxima, lokale Minima, lokale Geschwindigkeiten, Auslenkung und/oder Amplituden von Touch-Events handeln.

Die Gesamtheit der dynamischen Kennwerte, welche das Gesamtsignal kennzeichnen, können bevorzugt in einem Datensatz zusammengefasst werden, welcher mit einem Referenzdatensatz verglichen werden kann, um die aufgelegt elektrische Struktur zu identifizieren oder verifizieren. In einer bevorzugten Ausführungsform findet der Abgleich des Datensatzes unter Nutzung eines zuvor aus Aufzeichnungen oder Kalibrierdaten erstellten Machine Learning Models (*Artificial neural networks*) statt. Beispielsweise können zu diesem Zweck Referenzdaten erzeugt werden, in dem die Vorrichtung mit einer bekannten elektrischen Struktur auf einem Flächensensor aufgelegt wird und eine vorherbestimmte dynamische Eingabe, beispielsweise entlang einer Kante der Vorrichtung, erfolgt.

Der Begriff Referenzdaten umfasst bevorzugt Schwellwerte oder Referenzdatensätze. Der Begriff Referenzdaten bezieht sich bevorzugt auf alle Daten, welche eine Zuordnung eines detektierten zeitabhängigen Gesamtsignals zu einem Identifizierungscode bzw. einer bekannten elektrischen Struktur erlaubt.

Bevorzugt können die Referenzdaten auf einem computerverwendbaren oder computerlesbaren Medium auf der Datenverarbeitungseinheit gespeichert vorliegen. Jedes Dateiformat kann geeignet sein, welches in der Industrie verwendet wird. Die Referenzdaten können in einer separaten Datei gespeichert und/oder in der Software (z.B. im Quellcode) integriert vorliegen.

Aufgrund der Komplexität des zeitabhängigen Gesamtsignals ist eine derartige Zuordnung bzw. Identifikationen besonders sicher und vor Manipulation geschützt.

Die im Stand der Technik bekannten Identifikationsverfahren basieren insbesondere auf einer Erkennung von statischen Signalen einer elektrischen Struktur, beispielsweise einer Touch-Struktur, welche eine Berührung von Fingerspitzen nachahmt. Bei hinreichendem Geschick ist es mit den bekannten Verfahren bzw. Systemen prinzipiell möglich derartige Touch-Strukturen mit den Fingern nachzubilden.

Eine Nachbildung eines erfindungsgemäß erzeugten zeitabhängigen Gesamtsignals ist ohne Bereitstellung einer identischen elektrischen Struktur nicht möglich. Selbst wenn es gelänge die statischen Signale der Strukturelemente durch geschicktes Aufsetzen von Fingern oder anderen kapazitiven Strukturen nachzubilden, würde die Ablenkung durch eine dynamische Eingabe signifikant anders ausfallen. Vorteilhafterweise hängt die Verschiebung bzw. Ablenkung der statischen Signale unmittelbar von den kapazitiven Eigenschaften der Strukturelemente ab. Die durch eine dynamische Eingabe resultierende Änderung der Ladungsträgerverteilung ist mithin für die jeweiligen Strukturelemente einzigartig und hängt beispielsweise von deren Form, Größe und Orientierung ab.

Anhand der Bestimmung dynamischer Kennwerte kann die Software zudem eine Reihe von Plausibilitätsüberprüfungen durchführen, um eine Manipulation des Signals auszuzuschließen.

Beispielweise kann es bevorzugt sein, dass die Software den zeitlichen Verlauf der dynamische Eingabesignal und der dynamischen Signale auswertet und mit Referenzdaten vergleicht, um die Wahrscheinlichkeit abzuschätzen, dass eine Ablenkung der statischen Signal mittels des Eingabesignals zum detektierten zeitliche Verlauf der dynamischen Signale führt.

Wie obig erläutert, erfolgt die Ablenkung der statischen Signale durch die dynamische Eingabe bevorzugt zu einem Zeitpunkt *t*, wenn die jeweiligen Strukturelemente der elektrisch leitfähigen Struktur und das Eingabemittel in Wechselwirkung mit einer gleichen Zeile und/oder einer gleichen Spalte eines Elektrodengitters des kapazitiven Flächensensors stehen.

In einer bevorzugten Ausführungsform kann die Software somit überprüfen, ob eine solche zeitliche Korrelation zwischen dem detektierten dynamischen Eingabesignal und den detektierten abgelenkten dynamischen Signale der Strukturelemente auftritt. Auch kann die Software beispielsweise die Amplitude und/oder Orientierung der Ablenkung der statischen Signale, während des Überstreichens des Eingabemittel bestimmen und bevorzugt mit Referenzdaten vergleichen. Die Amplitude der Ablenkung kann beispielsweise sowohl von der Entfernung des dynamischen Eingabesignals von den Strukturelementen, als auch der Gesamtfläche der jeweiligen Strukturelemente abhängen. Die Orientierung der Ablenkung erfolgt bevorzugt in Richtung des Eingabemittels, wobei die Form der Strukturelemente zu einer geringfügig, aber ggf. charakteristischen Wichtung führen kann.

Die Bestimmung der dynamischen Kennwerte des zeitabhängiges Gesamtsignals und der Vergleich mit Schwellwerten und/oder Referenzdatensätzen, erlaubt somit bevorzugt sowohl eine Überprüfung der Plausibilität des Signals, als auch dessen Zuordnung zu Referenzdaten zu Identifizierungszwecken. Die Auswertung mittels der Software kann auf verschiedene Weise umgesetzt werden und mehrere Schritte umfassen. Vorzugsweise können zunächst die Geräteparameter des Gerätes, welchen die Flächensensor beinhaltet, z.B. die Auflösung des Flächensensors bzw. Touchscreens, bestimmt werden.

Hierdurch wird das Gesamtsignal umfassend eine Menge an Touch Events Schritt vorzugsweise vorgefiltert und spezifische Charakteristiken des Signals verstärkt oder angepasst werden. Vorteilhafterweise ist die Software somit nicht auf einen bestimmten Gerätetypen beschränkt, sondern kann optimale Ergebnisse für unterschiedliche elektronische Geräte liefern.

Nach einer Filterung des Gesamtsignales kann das Signal auf Plausibilität geprüft werden, indem Parameter wie ein zeitlicher Verlauf des Signals, Geschwindigkeit und Datendichte berechnet werden. Anhand eines Vergleiches mit bekannten bzw. kalibrierten Schwellwerten können somit etwaige Manipulation sicher ausgeschlossen werden.

Besonders bevorzugt werden im Anschluss eine Reihe diverse Kennwerte und Parameter der Signale bestimmt bzw. berechnet. Hierzu können u.a. die Kennwerte Start des Signals, Ende des Signals, lokale Maxima und Minima, lokale Geschwindigkeiten des Signals, Auslenkung, Amplituden, ggf. Periodenlänge von periodischen Signalen bestimmt werden und ggf. mit weiteren Merkmalen um das Gesamtsignal in einen Datensatz überführt werden. Die dynamischen Kennwerte sollten insbesondere geeignet sein die Position der statischen Signale sowie deren Ablenkung (dynamische Signale) zu charakterisieren. Anschließend kann der erhaltene Datensatz und einem Referenzdatensatz, der beispielsweise in einer Datenbank liegt, verglichen werden, um das Gesamtsignal zu dekodieren, wobei bevorzugt ein Machine Learning Algorithmus zum Einsatz kommen kann. Dekodieren meint bevorzugt eine Zuordnung des zeitabhängigen Gesamtsignales zu einer bekannten Identifizierungscode bzw. einer bekannten elektrische leitfähigen Struktur.

In einem weiteren Aspekt betrifft die Erfindung zudem ein Software-Programm zur Installation auf einem einen kapazitiven Flächensensor beinhaltenden Gerät gemäß Anspruch 15.

Aus den weiteren Unteransprüchen und der nachfolgenden Beschreibung sind weitere Vorteile, Merkmale und Einzelheiten der Erfindung zu entnehmen. Die Zeichnungen dienen lediglich beispielhaft der Klarstellung der Erfindung und haben keinen einschränkenden Charakter.

Die Erfindung wird anhand der nachfolgenden Figuren näher beschrieben:

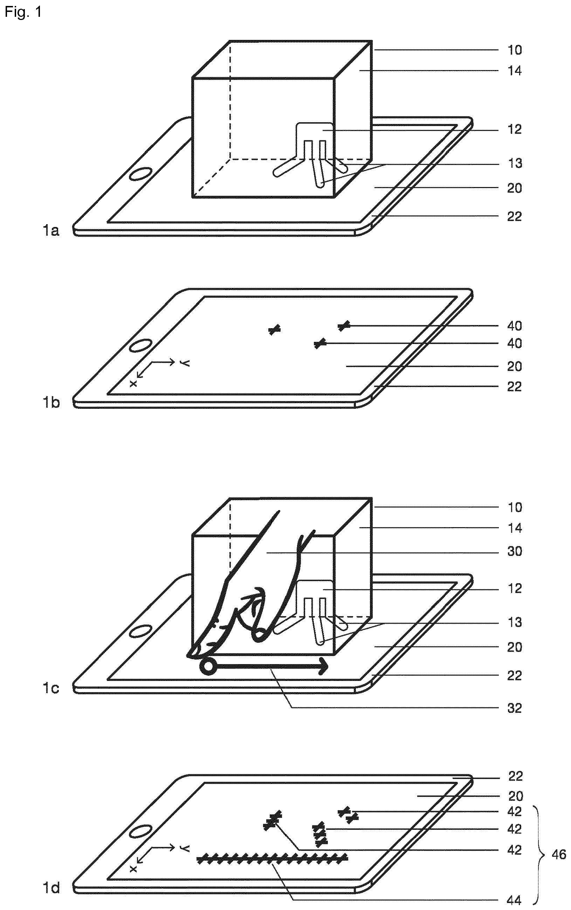

Figur 1 zeigt eine Vorrichtung (10) umfassend eine elektrisch leitfähige Struktur (12) umfassend mehrere Strukturelemente (13) angeordnet auf einem nicht-leitfähigen Substrat (14) zur Erzeugung eines zeitabhängigen Gesamtsignals (46) auf einem kapazitiven Flächensensor (20), dadurch gekennzeichnet, dass die elektrisch leitfähige Struktur (12) der Vorrichtung (10) eine Menge an im Wesentlichen statischen Signalen (40) auf dem kapazitiven Flächensensor (20) erzeugt und die statischen Signale (40) durch eine zusätzliche dynamische Eingabe mittels Eingabemittel (30) abgelenkt und in dynamische Signale (42) umgewandelt werden.
   Im dargestellten Ausführungsbeispiel stellt die Vorrichtung (10) ein dreidimensionales Objekt dar, z.B. eine Faltschachtel. Die elektrisch leitfähige Struktur (12) ist auf der Unterseite und einer Seitenfläche des dreidimensionalen Objekts angeordnet. Im Ausführungsbeispiel sind drei Strukturelemente (13) der elektrisch leitfähigen Struktur (12) dargestellt. Die Unterseite steht mit dem kapazitiven Flächensensor (20) in Wirkkontakt (Figur 1a) und die Strukturelemente (13) erzeugen im Wesentlichen statische Signale (40) auf dem kapazitiven Flächensensor (20) (Figur 1b), wenn die Vorrichtung (10) auf dem Flächensensor (20) platziert wurde. Die Positionen der statischen Signale (40) korrespondieren mit dem Flächenschwerpunkt der Strukturelemente (13).
Figur 1c zeigt die dynamische Eingabe mit Hilfe eines Eingabemittels (30) auf dem kapazitiven Flächensensor (20), im vorliegenden Ausführungsbeispiel mit Hilfe eines Fingers. Die Eingabe erfolgt in einer linearen Bewegung (32) entlang einer Seitenfläche der Vorrichtung (10). Das Eingabemittel (30) berührt dabei die elektrisch leitfähige Struktur (12) nicht.
Figur 1d zeigt das durch die dynamische Eingabe mittels Eingabemittel (30) erzeugte dynamische Eingabesignal (44) sowie die abgelenkten Signale (42). Die Ablenkung der Signale erfolgt vorzugsweise in Richtung des Eingabesignals entlang des Strukturelements (13). Die Gesamtheit der abgelenkten Signale (42) sowie das dynamische Eingabesignal (44) bilden das zeitabhängige Gesamtsignal (46), welches vom Flächensensor (20) beinhaltenden Gerät (22) auswertbar ist.
   Es ist anzumerken, dass in den Figuren die aufgezeichneten Signale dargestellt sind. Für den Fachmann ist es nachvollziehbar, dass beispielsweise das Eingabesignal (44) während der Eingabe nach und nach auf dem Flächensensor (20) entsteht. Im Sinne einer geeigneten Darstellung wurden die zeitabhängigen Signale "aufgezeichnet" und das Ergebnis dargestellt.

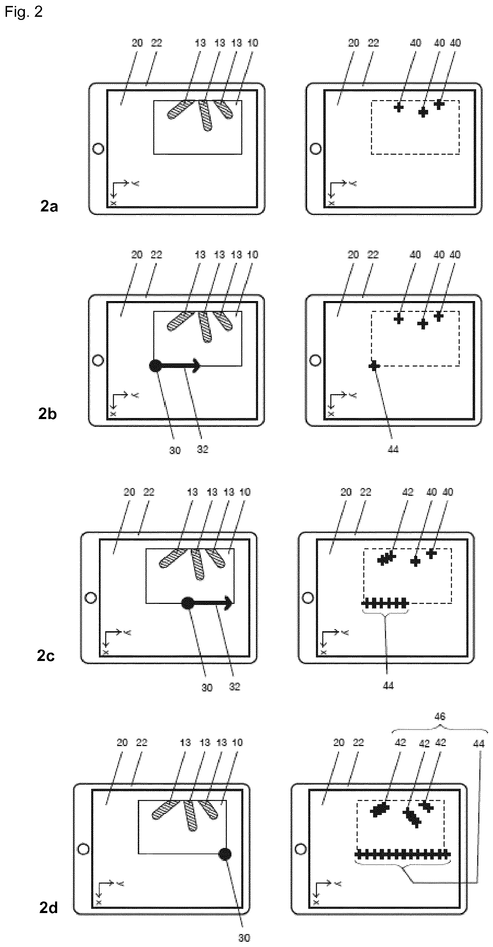

Figur 2a-d zeigt die Entstehung des zeitabhängigen Gesamtsignals (46) in einer zeitlichen Abfolge. Zur Vereinfachung der Darstellung ist jeweils die Unterseite eines dreidimensionalen Objektes (10) umfassend drei Strukturelemente (13) der elektrisch leitfähigen Struktur (12) dargestellt. Das Eingabemittel (30) ist zur Vereinfachung in Form eines Kreises dargestellt. Die auf dem kapazitiven Flächensensor (20) erzeugten Signale (40, 42, 44, 46) sind in Form von Kreuzen dargestellt, die die Koordinaten der jeweiligen Signale (40, 42, 44, 46) repräsentieren. Auch hier wurden die zeitabhängigen Signale "aufgezeichnet" und in gesammelter Form dargestellt um die Historie der Positionen und die Bewegungsrichtung der Signale nachvollziehen zu können. Es ist zu beachten, dass bei Ablenkung der Signale die ursprünglich vorhandenen Signale in der Ausgangsposition zum Zeitpunkt der Ablenkung nicht vorhanden sind, aber hier zur besseren Nachvollziehbarkeit mit dargestellt sind.
Figur 2a links zeigt die Vorrichtung (10) die auf dem kapazitiven Flächensensor (20) platziert wurde. Figur 2a rechts zeigt die im Wesentlichen statischen Signale (40), die durch die Strukturelemente (13) der elektrisch leitfähigen Struktur (12) auf dem kapazitiven Flächensensor (20) erzeugt werden. Die Position der statischen Signale (40) auf dem kapazitiven Flächensensor (20) korrespondieren mit den Flächenschwerpunkten der Strukturelemente (13) der elektrisch leitfähigen Struktur (12).
Figur 2b links zeigt zusätzlich das Eingabemittel (30) welches an der Kante der Vorrichtung (10) platziert wurde und auf dem kapazitiven Flächensensor (20) ein Eingabesignal (44) erzeugt (Figur 2b rechts). Figur 2b stellt den Beginn der dynamischen Eingabe dar.
Figur 2c links zeigt das Fortschreiten der dynamischen Eingabe mittels Eingabemittel (30) in Form einer linearen Bewegung (32) entlang der Kante der Vorrichtung (10). Figur 2c rechts zeigt das sich entwickelnde Eingabesignal (44) sowie die Ablenkung des statischen Signals, welches vom linken der drei Strukturelemente (13) erzeugt wurde. Es entsteht an dieser Stelle ein abgelenktes Signal (42), wenn Eingabemittel (30) und Strukturelement (13) auf gleicher Höhe sind, d.h. in Wechselwirkung mit der gleichen Zeile (nicht dargestellt) des kapazitiven Flächensensors (20) stehen. Die Ablenkung des Signals erfolgt in Richtung des Eingabesignals (44) und erfolgt entlang des Strukturelements (13). Mit anderen Worten wird durch die Gestaltung des Strukturelements (13) die Richtung und Intensität der Ablenkung des Signals festgelegt.
Figur 2d links zeigt den Abschluss der Bewegung des Eingabemittels (30) an der Kante zwischen Vorrichtung (10) und kapazitivem Flächensensor (20). Figur 2d rechts zeigt das dynamische Gesamtsignal (46) bestehend aus den abgelenkten Signalen (42) und dem dynamischen Eingabesignal (44), welches nun vom Flächensensor (20) beinhaltendenden Gerät (22) auswertbar ist.
   Die Zeichnung verdeutlicht, dass sich die im Wesentlichen statischen Signale (40) entlang der Strukturelemente (13) in Richtung des Eingabemittel (30) bewegen und somit in dynamische Signale (42) umwandeln.

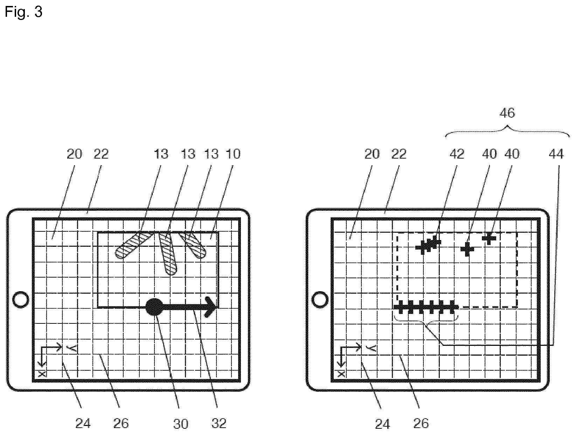

Figur 3 zeigt einen vergleichbaren Gegenstand wie Figur 2c, allerdings ergänzt durch die Darstellung des Elektrodengitters (24, 26) des kapazitiven Flächensensors (20). Die Zeilen (24) und Spalten (26) des Elektrodengitters sind orthogonal zueinander angeordnet. Im dargestellten Beispiel stand das Eingabemittel (30) mit bereits vier Elektrodenzeilen (24) in Wechselwirkung. Entsprechend wurde das statische Signal (40), welches durch das linke der drei Strukturelemente (13) erzeugt wurde, bereits abgelenkt und in ein dynamisches Signal (42) umgewandelt, da dieses Strukturelement in Wechselwirkung mit mindestens einer dieser Zeilen (24) in Wechselwirkung steht.

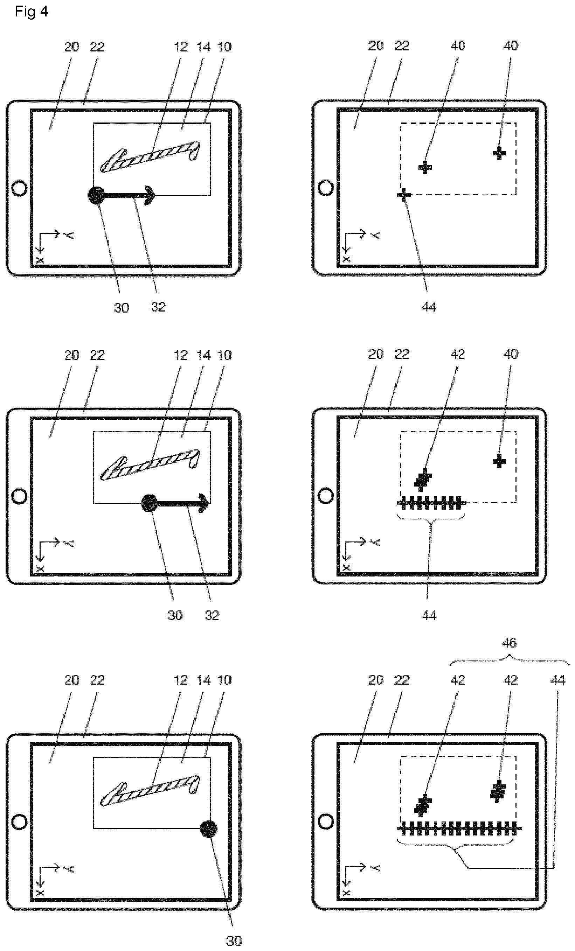

Figur 4a-c zeigt die Entstehung des zeitabhängigen Gesamtsignals (46) in einer zeitlichen Abfolge. Die Vorrichtung (10) im Ausführungsbeispiel ist ein kartenähnliches Objekt, auf dem die elektrisch leitfähige Struktur (12) angeordnet ist. Das Eingabemittel (30) ist zur Vereinfachung in Form eines Kreises dargestellt. Die auf dem kapazitiven Flächensensor (20) erzeugten Signale (40, 42, 44, 46) sind in Form von Kreuzen dargestellt, die die Koordinaten der jeweiligen Signale (40, 42, 44, 46) repräsentieren. Auch hier wurden die zeitabhängigen Signale "aufgezeichnet" und in gesammelter Form dargestellt um die Historie der Positionen und die Bewegungsrichtung der Signale nachvollziehen zu können. Es ist zu beachten, dass bei Ablenkung der Signale die ursprünglich vorhandenen Signale in der Ausgangsposition zum Zeitpunkt der Ablenkung nicht vorhanden sind, aber hier zur besseren Nachvollziehbarkeit mit dargestellt sind.
Figur 4a links zeigt die Vorrichtung (10) in Form eines kartenförmigen Objekts, platziert auf einem kapazitiven Flächensensor (20). Die Figur zeigt das Eingabemittel (30), welches an der Kante der Vorrichtung (10) platziert ist, zu Beginn der Bewegung. Figur 4a rechts zeigt die durch die elektrisch leitfähige Struktur (12) erzeugten statischen Signale (40) sowie das durch das Eingabemittel (30) erzeugte Signal (44).
Figur 4b links zeigt die fortlaufende Bewegung (32) des Eingabemittels (30) entlang der Kante der Vorrichtung (10). Figur 4b rechts zeigt das sich entwickelnde Eingabesignal (44) sowie die Ablenkung des statischen Signals, welches vom linken Teil der elektrisch leitfähigen Struktur (12) erzeugt wurde. Es entsteht an dieser Stelle ein abgelenktes Signal (42), wenn Eingabemittel (30) und statisches Signal (40) auf gleicher Höhe sind, d.h. in Wechselwirkung mit der gleichen Zeile (nicht dargestellt) des kapazitiven Flächensensors (20) stehen.
Figur 4c links zeigt den Abschluss der Bewegung des Eingabemittels (30) an der Kante zwischen Vorrichtung (10) und kapazitivem Flächensensor (20). Figur 4c rechts zeigt das dynamische Gesamtsignal (46) bestehend aus den abgelenkten Signalen (42) und dem dynamischen Eingabesignal (44), welches nun vom Flächensensor (20) beinhaltendenden Gerät (22) auswertbar ist.
   Die Zeichnung verdeutlicht, dass sich die im Wesentlichen statischen Signale (40) entlang der elektrisch leitfähigen Struktur (12) in Richtung des Eingabemittel (30) bewegen und somit in dynamische Signale (42) umwandeln.

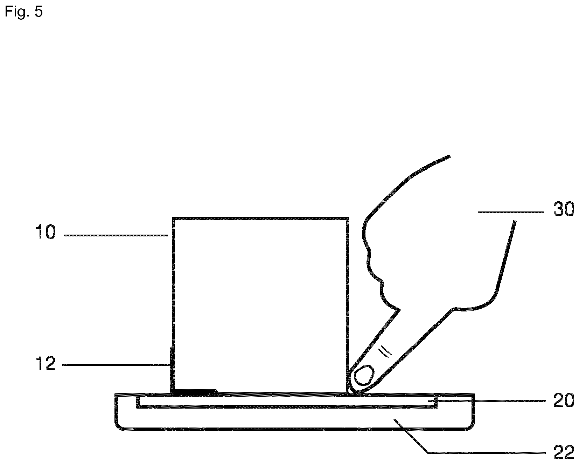

Figur 5 zeigt die Bewegung eines Eingabemittels (30) entlang einer Kante, die zwischen Flächensensor (20) und Vorrichtung (10) gebildet wird. Die Vorrichtung (10) weist eine elektrisch leitfähige Struktur (12) auf, die auf der Unterseite und/oder einer Seitenfläche der Vorrichtung (10) angeordnet sein kann wobei das Eingabemittel nicht in Kontakt mit der elektrisch leitfähigen Struktur (12) steht. Durch die Bewegung des Eingabemittels (30) entlang des Übergangsbereichs zwischen Flächensensor (20) und Vorrichtung (10) wird vorzugsweise eine dynamische Eingabe durchgeführt, die zu einer Umwandlung der statischen Signale in dynamische Signale führt.

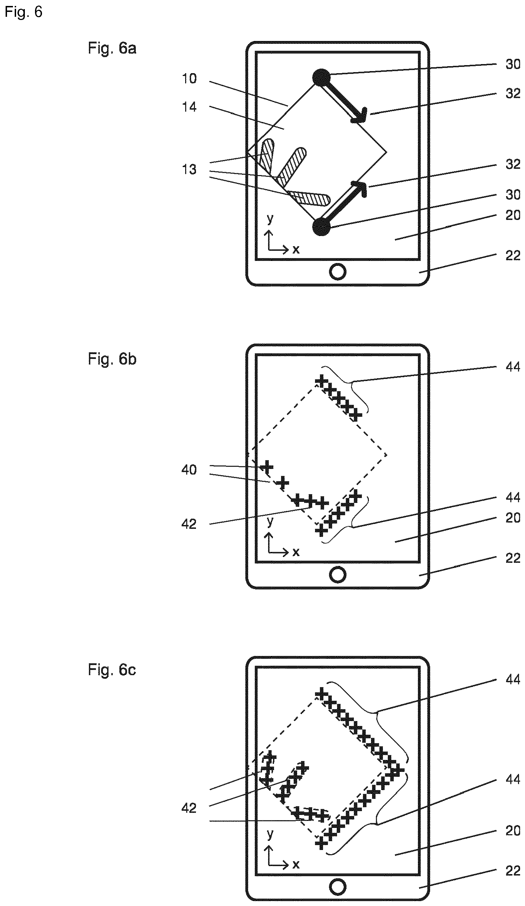

Figur 6a-c zeigt eine besondere Ausführungsform der Erfindung. Die Vorrichtung (10) im Ausführungsbeispiel ist ein dreidimensionales Objekt, auf dem die elektrisch leitfähige Struktur (12) umfassend drei Strukturelemente (13) auf dem Substratmaterial (14) angeordnet ist. Im vorliegenden Ausführungsbeispiel werden zwei Eingabemittel (30) verwendet, beispielsweise zwei Finger. Die Eingabemittel (30) sind zur Vereinfachung in Form von Kreisen dargestellt. Die auf dem kapazitiven Flächensensor (20) erzeugten Signale (40, 42, 44, 46) sind in Form von Kreuzen dargestellt, die die Koordinaten der jeweiligen Signale (40, 42, 44, 46) repräsentieren. Auch hier wurden die zeitabhängigen Signale "aufgezeichnet" und in gesammelter Form dargestellt um die Historie der Positionen und die Bewegungsrichtung der Signale nachvollziehen zu können. Es ist zu beachten, dass bei Ablenkung der Signale die ursprünglich vorhandenen Signale in der Ausgangsposition zum Zeitpunkt der Ablenkung nicht vorhanden sind, aber hier zur besseren Nachvollziehbarkeit mit dargestellt sind.
Figur 6a zeigt die Vorrichtung (10) in Form eines dreidimensionalen Objekts, platziert auf einem kapazitiven Flächensensor (20). Die Figur zeigt zwei Eingabemittel (30), welche jeweils an zwei unterschiedlichen Kanten der Vorrichtung (10) platziert sind, zu Beginn der Bewegung. Die Bewegungsrichtung (32) der beiden Eingabemittel (30) ist durch Pfeile dargestellt. Die Bewegung (32) erfolgt entlang zweier Kanten des Objektes (10). Im vorliegenden Ausführungsbeispiel sind die beiden Eingabemittel (30) bevorzugt zwei Finger, beispielsweise Daumen und Zeigefinger des Benutzers. Beide Finger werden aufeinander zu bewegt, wie durch die Pfeile dargestellt.
Figur 6b zeigt die fortschreitenden Eingabesignale (44), die durch die elektrisch leitfähige Struktur (12) erzeugten statischen Signale (40) sowie die Ablenkung des "unteren" statischen Signals, welches vom unteren Strukturelement (13) der elektrisch leitfähigen Struktur (12) erzeugt wurde. Es entsteht an dieser Stelle ein abgelenktes Signal (42), wenn das untere Eingabemittel (30) und das statische Signal (40) auf gleicher Höhe sind, d.h. in Wechselwirkung mit der gleichen Zeile (nicht dargestellt) des kapazitiven Flächensensors (20) stehen.
Figur 6c zeigt die vollständigen Eingabesignale (44) sowie die abgelenkten Signale (42), nachdem beide Eingabemittel (30) aufeinander zu bis zur rechten Kante des Objekts (10) bewegt wurden. Das zeitabhängige Gesamtsignal (46) umfasst die statischen Signale (40), die abgelenkten Signale (42) und die Eingabesignale (44). Zur besseren Übersichtlichkeit ist das zeitabhängige Gesamtsignal (46) in dieser Grafik nicht dargestellt.

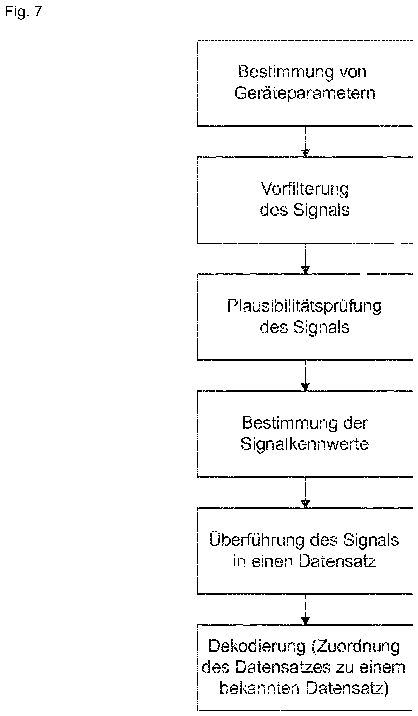

In Figur 7 sind die Schritte der Verarbeitung und Auswertung der Touch-Events bzw. Touches mit Hilfe eines Software-Programms dargestellt. Vorzugsweise werden zunächst die Geräteparameter des Gerätes, welchen die Flächensensor beinhaltet, z.B. die Auflösung des Touchscreens, bestimmt. In Abhängigkeit des Gerätes wird das Signal umfassend eine Menge an Touch Events im nächsten Schritt vorzugsweise vorgefiltert und spezifische Charakteristiken des Signals verstärkt oder angepasst. Anschließend wird das Signal auf Plausibilität geprüft indem Parameter wie zeitlicher Verlauf des Signals, Geschwindigkeit und Datendichte berechnet und auf etwaige Manipulation überprüft und mit bekannten Schwellwerten verglichen werden. Es ist bevorzugt, dass anschließend diverse Kennwerte und Parameter des Signals bestimmt bzw. berechnet werden umfassend die Kennwerte Start des Signals, Ende des Signals, lokale Maxima und Minima, lokale Geschwindigkeiten des Signals, Auslenkung, Amplituden, ggf. Periodenlänge von periodischen Signalen und ggf. weitere Merkmale um das Signal in einen vergleichbaren Datensatz zu überführen. Es ist insbesondere bevorzugt, anschließend diesen Datensatz mit anderen Datensätzen zu vergleichen und einem bekannten Datensatz, der beispielsweise in einer Datenbank liegt, zuzuordnen und somit das Signal zu dekodieren. In einer weiteren bevorzugten Ausführungsform findet der Abgleich des Datensatzes unter Nutzung eines zuvor aus Aufzeichnungen erstellten Machine Learning Models (*Artificial neural networks*) statt. Es war insbesondere überraschend, dass die Nutzung eines Machine Learning Models zur Dekodierung des Signals insbesondere für komplexe Signale mit vielen verschiedenen Parametern geeignet ist.

### Bezugszeichenliste:

- 10: Vorrichtung
- 12: elektrisch leitfähige Struktur
- 13: Strukturelemente der elektrisch leitfähigen Struktur
- 14: Substrat
- 20: kapazitiver Flächensensor
- 22: kapazitiven Flächensensor umfassendes Gerät
- 24: Zeile des Elektrodengitters des kapazitiven Flächensensors
- 26: Spalte des Elektrodengitters des kapazitiven Flächensensors
- 30: Eingabemittel
- 32: Bewegung
- 40: Signal
- 42: abgelenktes Signal
- 44: Eingabesignal
- 46: zeitabhängiges Gesamtsignal

## Patentansprüche

1. Verfahren zur Erzeugung eines manipulationssicheren zeitabhängigen Signals auf einem kapazitiven Flächensensor (20) umfassend die folgenden Schritte:
a) Bereitstellung eines Gerätes (22) mit dem kapazitiven Flächensensor (20) sowie einer Vorrichtung (10) umfassend eine elektrisch leitfähige Struktur (12) mit Strukturelementen (13) auf einem nicht-leitfähigen Substrat (14) zur Erzeugung von statischen Signalen (40) auf dem kapazitiven Flächensensor (20),
b) Auflegen der Vorrichtung (10) auf den Flächensensor (20), wodurch eine Menge an statischen Signalen (40) auf dem Flächensensor (20) erzeugt wird und wobei den statischen Signalen (40) Positionen auf dem Flächensensor (20) zugeordnet sind, welche durch die Ausgestaltung der Strukturelemente (13) der elektrisch leitfähigen Struktur (12) festgelegt sind,
c) Vornahme einer dynamischen Eingabe in Form einer Bewegung und/oder einer Geste mit einem Eingabemittel (30) auf oder entlang der Vorrichtung (10) ohne, dass das Eingabemittel die elektrisch leitfähige Struktur berührt, wobei eine Kante der Vorrichtung (10) als Führung für die Eingabe mittels des Eingabemittels (30) verwendet wird, und wodurch auf dem kapazitiven Flächensensor (20) ein dynamisches Eingabesignal (44) erzeugt wird, und die den statischen Signalen (40) auf dem kapazitiven Flächensensor (20) zugeordneten Positionen abgelenkt, und somit die statischen Signale (40) in dynamische Signale (42) umgewandelt werden, sodass das dynamische Eingabesignal (44) und die dynamischen Signale (42) ein zeitabhängiges Gesamtsignal (46) darstellen, welches von dem den kapazitiven Flächensensor (20) beinhaltenden Gerät (22) ausgewertet wird.

2. Verfahren nach Anspruch 1, wobei jedes der Strukturelemente (13) auf dem kapazitiven Flächensensor jeweils ein statisches Signal (40) erzeugt, wobei die erzeugten Signale (40) durch Zeitstempelinformationen sowie eine Menge an Koordinatenpaaren gekennzeichnet sind.

3. Verfahren nach Anspruch 1 oder 2, wobei die Ablenkung der den statischen Signalen (40) auf dem kapazitiven Flächensensor (20) zugeordneten Positionen zu einem Zeitpunkt *t* erfolgt, wenn die jeweiligen Strukturelemente (13) der elektrisch leitfähigen Struktur (12) und das Eingabemittel (30) in Wechselwirkung mit einer gleichen Zeile (24) und/oder einer gleichen Spalte (26) eines Elektrodengitters des kapazitiven Flächensensors (20) stehen.

4. Verfahren nach einem der vorherigen Ansprüche, wobei die dynamische Eingabe ein Führen des Eingabemittels (30) über den Flächensensor (20) umfasst, welches mindestens ein Überstreichen von Zeilen (24) und/oder Spalten (26) eines Elektrodengitters des Flächensensors (20) umfasst, auf welchen die Strukturelemente (13) der Vorrichtung (10) positioniert vorliegen.

5. Verfahren nach einem der vorherigen Ansprüche, wobei die Vornahme einer dynamischen Eingabe mittels zwei oder mehr Eingabemittel (30) erfolgt.

6. Verfahren nach einem der vorangegangenen Ansprüche wobei die Strukturelemente (13) Richtung und Intensität der Ablenkung der den statischen Signale (40) auf dem Flächensensor (20) zugeordneten Positionen festlegen.

7. Verfahren nach einem der vorangegangenen Ansprüche wobei bei der Auswertung des zeitabhängigen Gesamtsignales (46) die Amplitude und/oder Geschwindigkeit der Ablenkung der den statischen Signalen (40) auf dem kapazitiven Flächensensor (20) zugeordneten Positionen als Reaktion auf die dynamische Eingabe bestimmt wird.

8. Verfahren nach einem der vorangegangenen Ansprüche, wobei die Vorrichtung (10) ein kartenförmiges Objekt, ein dreidimensionales Objekt, eine Verpackung oder eine Faltschachtel ist.

9. Vorrichtung (10) zur Erzeugung eines manipulationssicheren zeitabhängigen Signals auf einem kapazitiven Flächensensor (20) in einem Verfahren gemäß einem der vorherigen Ansprüche,
wobei die Vorrichtung (10) eine elektrisch leitfähige Struktur (12) mit Strukturelementen (13) auf einem nicht-leitfähigen Substrat (14) zur Erzeugung eines zeitabhängigen Gesamtsignals (46) auf dem kapazitiven Flächensensor (20) umfasst,
wobei durch Auflegen der Vorrichtung (10) auf den kapazitiven Flächensensor (20) eine Menge an statischen Signalen (40) auf dem kapazitiven Flächensensor (20) erzeugbar sind,
wobei den statischen Signalen (40) Positionen auf dem kapazitiven Flächensensor (20) zuordenbar sind, welche durch die Ausgestaltung der Strukturelemente (13) der elektrisch leitfähigen Struktur (12) festgelegt sind,
wobei die den statischen Signalen (40) auf dem kapazitiven Flächensensor (20) zuordenbaren Positionen durch eine zusätzliche dynamische Eingabe mittels eines Eingabemittel (30) ablenkbar, und somit die statischen Signale (40) in dynamische Signale (42) umwandelbar sind,
wobei die zusätzliche dynamische Eingabe eine dynamische Eingabe in Form einer Bewegung und/oder einer Geste mit dem Eingabemittel (30) auf oder entlang der Vorrichtung (10) ohne, dass das Eingabemittel (30) die elektrisch leitfähige Struktur berührt, ist,
wobei die Vorrichtung (10) mindestens eine Kante zum Führen des Eingabemittels (30) während der Vornahme der zusätzlichen dynamischen Eingabe umfasst,
wobei durch die zusätzliche dynamische Eingabe auf dem kapazitiven Flächensensor (20) ein dynamisches Eingabesignal (44) erzeugbar ist,
wobei das dynamische Eingabesignal (44) und die dynamischen Signale (42) das zeitabhängige Gesamtsignal (46) darstellen, welches von einem den kapazitiven Flächensensor (20) beinhaltenden Gerät (22) auswertbar ist, und
wobei die Strukturelemente (13) linienförmig sind und einen Winkel mit der Orthogonalen der Kante zwischen 5° und 75° aufweisen.

10. Vorrichtung (10) gemäß dem vorherigen Anspruch, wobei die Strukturelemente (13) eine Breite von 0,5 mm bis 8 mm, bevorzugt 1,5 mm bis 5 mm aufweisen.

11. Vorrichtung (10) nach Anspruch 9 oder 10, wobei die Strukturelemente (13) einen Winkel mit der Orthogonalen zwischen 10° und 45° aufweisen.

12. System zur Erzeugung eines manipulationssicheren zeitabhängigen Signals (46) auf einem kapazitiven Flächensensor (20), wobei das System eine Vorrichtung (10) sowie ein Gerät (22) mit dem kapazitiven Flächensensor (20) umfasst,
wobei die Vorrichtung (10) eine elektrisch leitfähige Struktur (12) mit Strukturelementen (13) auf einem nicht-leitfähigen Substrat (14) aufweist, welche dazu eingerichtet sind, eine Menge an statischen Signalen (40) auf dem kapazitiven Flächensensor (20) durch Auflegen der Vorrichtung (10) auf den kapazitiven Flächensensor (20) zu erzeugen, wobei den statischen Signalen (40) Positionen auf dem Flächensensor (20) zugeordnet sind, welche durch die Ausgestaltung der Strukturelemente (13) der elektrisch leitfähigen Struktur (12) festgelegt sind,
wobei auf dem Flächensensor durch Vornahme einer dynamischen Eingabe in Form einer Bewegung und/oder einer Geste mit einem Eingabemittel (30) auf oder entlang der Vorrichtung (10) ein dynamisches Eingabesignal (44) erzeugt wird ohne, dass das Eingabemittel die elektrisch leitfähige Struktur berührt und wobei eine Kante der Vorrichtung (10) als Führung für die Eingabe mittels des Eingabemittels (30) verwendet wird, wobei durch die dynamische Eingabe die den statischen Signale (40) zugeordneten Positionen abgelenkt, und somit die statischen Signale (40) in dynamische Signale (42) umgewandelt werden, und
wobei das durch das Eingabemittel (30) erzeugte dynamische Eingabesignal (44) und die dynamischen Signale (42) ein zeitabhängiges Gesamtsignal (46) darstellen, welches vom den kapazitiven Flächensensor (20) beinhaltenden Gerät (22) ausgewertet wird.

13. System gemäß dem vorherigen Anspruch, wobei das System eine Datenverarbeitungsvorrichtung aufweist, welche dazu eingerichtet ist, das zeitabhängige Gesamtsignal (46) auszuwerten, wobei auf der Datenverarbeitungsvorrichtung bevorzugt eine Software (,app') installiert vorliegt, welche Befehle umfasst, dynamische Kennwerte des zeitabhängiges Gesamtsignals zu bestimmen und mit Referenzdaten zu vergleichen.

14. System gemäß dem vorherigen Anspruch , wobei das den Flächensensor (20) beinhaltende Gerät (22) das zeitabhängige Gesamtsignal (46) als eine Menge von Touch-Events aufbereitet und die Software dynamische Kennwerte der Menge von Touch-Events bestimmt, wobei bevorzugt die dynamischen Kennwerte ein Start, ein Ende, lokale Maxima, lokale Minima, Geschwindigkeiten, Auslenkung und/oder Amplituden von Touch-Events umfassen.

15. Software-Programm zur Installation auf einem einen kapazitiven Flächensensor (20) beinhaltenden Gerät (22), wobei das Software-Programm Befehle umfasst, dynamische Kennwerte des durch Durchführung des Verfahrens gemäß einem der Ansprüche 1-8 erzeugten zeitabhängigen Gesamtsignals (46) zu bestimmen und mit Referenzdaten zu vergleichen.

## Claims

1. Method of generating a tamper-proof time-dependent signal on a capacitive surface sensor (20) comprising the following steps:
a) Providing an apparatus (22) having a capacitive surface sensor (20) and a device (10) comprising an electrically conductive structure (12) having structural elements (13) on a non-conductive substrate (14) for generating static signals (40) on the capacitive surface sensor (20),
b) Placing the device (10) on the surface sensor (20), thereby generating a set of static signals (40) on the surface sensor (20), and wherein the static signals (40) are assigned positions on the surface sensor (20) which are determined by the arrangement of the structural elements (13) of the electrically conductive structure (12),
c) Providing a dynamic input on or along the device (10) in the form of a movement and/or a gesture with an input means (30) without the input means (30) contacting the electrically conductive structure (12), wherein an edge of the device (10) is used for guiding the input by the input means (30) and whereby on the capacitive surface sensor (20) a dynamic input signal (44) is generated and deflects the assigned positions of the static signals (40) on the capacitive surface sensor (20) and thereby converting the static signals (40) into dynamic signals (42) so that the dynamic input signal (44) and the dynamic signals (42) represent a time-dependent overall signal (46) which is evaluated by the apparatus (22) including the capacitive surface sensor (20).

2. Method according to claim 1,
wherein each structural element (13) on the capacitive surface sensor generates a respective static signal (40), the generated signals (40) being **characterized by** a time stamp information and a set of coordinate pairs.

3. Method according to claim 1 or 2
wherein the deflection of the assigned positions of the static signals (40) takes place at a time *t* when the respective structural elements (13) of the electrically conductive structure (12) and the input means (30) are in interaction with a same row (24) and/or a same column (26) of an electrode grid of the capacitive surface sensor (20).

4. Method according to any one of the preceding claims
wherein the dynamic input comprises guiding the input means (30) over the surface sensor (20), which comprises at least sweeping rows (24) and/or columns (26) of the electrode grid on which the structural elements (13) of the device (10) are presently positioned.

5. Method according to any one of the preceding claims
wherein the dynamic input is performed by means of two or more input means (30).

6. Method according to any one of the preceding claims,
wherein the structural elements (13) determine the direction and intensity of the deflection of the assigned positions on the capacitive surface sensor (20) of the static signals (40).

7. Method according to any one of the preceding claims,
wherein during the evaluation of the time-dependent overall signal (46) the amplitude and/or velocity of the deflection of the assigned positions on the capacitive surface sensor (20) of the static signals (40) is determined in response to the dynamic input.

8. Method according to any one or more of the preceding claims,
wherein the device (10) is a card-shaped object, a three-dimensional object, a package or a folding box.

9. Device (10) for generating a tamper-proof time-dependent signal on a capacitive surface sensor (20) in a method according to any one of the preceding claims
wherein the device (10) comprises an electrically conductive structure (12) with structural elements (13) on a non-conductive substrate (14) for generating a time-dependent overall signal (46) on the capacitive surface sensor (20), wherein by placing the device (10) on the capacitive surface sensor (20) a set of static signals (40) can be generated on the capacitive surface sensor (20), wherein the static signals (40) are assigned positions on the surface sensor (20) which are determined by the arrangement of the structural elements (13) of the electrically conductive structure (12), wherein the assigned positions on the surface sensor (20) of static signals (40) can be deflected by an additional dynamic input by means of an input means (30) and thereby the static signals (40) can be converted into dynamic signals (42),
wherein the additional dynamic input is a dynamic input on or along the device (10) in the form of a movement and/or a gesture with an input means (30) without the input means (30) contacting the electrically conductive structure (12),
wherein device (10) comprises an edge for the guiding the input means (30) while providing the additional dynamic input by the input means (30).
wherein by the additional dynamic input on the capacitive surface sensor (20) a dynamic input signal (44) can be generated, wherein the dynamic input signal (44) and the dynamic signals (42) represent the time-dependent overall signal (46) which can evaluated by an apparatus (22) including the capacitive surface sensor (20),
wherein the structural elements (13) are line-shaped having an angle with the orthogonal of the edge between 5° and 75°.

10. Device (10) according to the previous claim
wherein the structural elements (13) have a width of 0.5 mm to 8 mm, preferably 1.5 mm to 5 mm.

11. Device (10) according to claim 9 or 10
wherein the structural elements (13) have an angle with the orthogonal between 10° and 45°.

12. System for generating a tamper-proof time-dependent signal (46) on a capacitive surface sensor (20), the system comprising a device (10) and an apparatus (22) comprising the capacitive surface sensor (20),
wherein the device (10) comprises an electrically conductive structure (12) having structural elements (13) on a non-conductive substrate (14) adapted to generate a set of static signals (40) on the capacitive surface sensor (20) by placing the device (10) on the capacitive surface sensor (20), wherein the static signals (40) are assigned positions on the capacitive surface sensor (20) which are determined by the arrangement of the structural elements (13) of the electrically conductive structure (12),
wherein by providing a dynamic input on or along the device (10) in the form of a movement and/or a gesture with an input means (30) a dynamic input signal (44) is generated without the input means (30) contacting the electrically conductive structure (12) and wherein an edge of the device is used for the guiding the input with the input means (30), wherein by means of the dynamic input the assigned positions of the static signals (40) are deflected and thereby converting the static signals (40) into dynamic signals (42) and wherein the dynamic input signal (44) generated by the input means (30) and the dynamic signals (42) represent a time-dependent overall signal (46) which is evaluated by the apparatus (22) including the capacitive surface sensor (20).

13. System according to the preceding claim,
wherein the system comprises a data processing device which is adapted to evaluate the time-dependent overall signal (46), wherein preferably on the data processing device a software ('app') is installed comprising commands for determining dynamic characteristics of the time-dependent overall signal (46) and comparing the dynamic characteristics with reference data.

14. System according to the previous claim
wherein the apparatus (22) including the surface sensor (20) processes the time-dependent overall signal (46) as a set of touch events and the software determines dynamic characteristics of the set of touch events wherein preferably the dynamic characteristics comprise a start, an end, local maxima, local minima, velocities, deflections and/or amplitudes of touch events.

15. Software program for installation on a device (22) including a capacitive surface sensor (20), wherein the software program comprises commands for determining dynamic characteristics of the time-dependent overall signal (46) generated by performing the method according to any one of claims 1-8 and comparing the dynamic characteristics with reference data.

## Revendications

1. Procédé pour générer un signal inviolable variable en fonction du temps sur un capteur surfacique capacitif (20), comprenant les étapes suivantes :
a) la fourniture d'un appareil (22) avec le capteur surfacique capacitif (20) ainsi qu'un dispositif (10) comprenant une structure électriquement conductrice (12) avec des éléments structuraux (13) sur un substrat non conducteur (14) pour générer des signaux statiques (40) sur le capteur surfacique capacitif (20),
b) le placement du dispositif (10) sur le capteur surfacique (20), de sorte qu'un certain nombre de signaux statiques (40) sont générés sur le capteur surfacique (20) et dans lequel des positions sur le capteur surfacique (20) sont affectées aux signaux statiques (40), lesquelles positions sont définies par la conception des éléments structuraux (13) de la structure électriquement conductrice (12),
c) l'exécution d'une saisie dynamique sous la forme d'un mouvement et/ou d'un geste avec un moyen de saisie (30) sur ou le long du dispositif (10) sans que le moyen de saisie ne touche la structure électriquement conductrice, dans lequel un bord du dispositif (10) est utilisé comme guide pour la saisie au moyen du moyen de saisie (30), et par lequel un signal de saisie dynamique (44) est généré sur le capteur surfacique capacitif (20), et les positions affectées aux signaux statiques (40) sont déviées sur le capteur surfacique capacitif (20), et les signaux statiques (40) sont ainsi transformés en signaux dynamiques (42),
de sorte que le signal de saisie dynamique (44) et les signaux dynamiques (42) représentent un signal total variable en fonction du temps (46) qui est évalué par le dispositif (22) contenant le capteur surfacique capacitif (20).

2. Procédé selon la revendication 1, dans lequel chacun des éléments structuraux (13) génère un signal statique (40) sur le capteur surfacique capacitif, dans lequel les signaux générés (40) sont **caractérisés par** des informations d'horodatage ainsi qu'une quantité de paires de coordonnées.

3. Procédé selon la revendication 1 ou 2, dans lequel la déviation des positions affectées aux signaux statiques (40) sur le capteur capacitif surfacique (20) intervient à un instant t si les éléments structuraux respectifs (13) de la structure électriquement conductrice (12) et le moyen de saisie (30) interagissent avec une même ligne (24) et/ou une même colonne (26) d'une grille d'électrodes du capteur surfacique capacitif (20) .

4. Procédé selon l'une quelconque des revendications précédentes, dans lequel la saisie dynamique comprend un guidage du moyen de saisie (30) via le capteur capacitif (20), qui comprend au moins un balayage de lignes (24) et/ou de colonnes (26) d'une grille d'électrodes du capteur surfacique (20), sur laquelle sont positionnés les éléments structuraux (13) du dispositif (10).

5. Procédé selon l'une quelconque des revendications précédentes, dans lequel l'exécution d'une saisie dynamique intervient au moyen de deux moyens de saisie (30) ou plus.

6. Procédé selon l'une des revendications précédentes, dans lequel les éléments structuraux (13) définissent la direction et l'intensité de la déviation des positions affectées aux signaux statiques (40) sur le capteur surfacique (20).

7. Procédé selon l'une quelconque des revendications précédentes, dans lequel, lors de l'évaluation du signal total variable en fonction du temps (46), l'amplitude et/ou la vitesse de la déviation des positions affectées aux signaux statiques (40) sur le capteur surfacique capacitif (20) sont déterminées en tant que réaction à la saisie dynamique.

8. Procédé selon l'une quelconque des revendications précédentes, dans lequel le dispositif (10) est un objet en forme de carte, un objet tridimensionnel, un emballage ou une boîte pliante.

9. Dispositif (10) pour générer un signal inviolable variable en fonction du temps sur un capteur surfacique capacitif (20)
dans un procédé selon l'une quelconque des revendications précédentes, dans lequel le dispositif (10) comprend une structure électriquement conductrice (12) avec des éléments structuraux (13) sur un substrat non conducteur (14) pour générer un signal total variable en fonction du temps (46) sur le capteur surfacique capacitif (20), dans lequel, par le placement du dispositif (10) sur le capteur surfacique capacitif (20), une quantité de signaux statiques (40) sont productibles sur le capteur surfacique capacitif (20),
dans lequel des positions sur le capteur surfacique capacitif (20) peuvent être affectées aux signaux statiques (40), lesquelles positions sont définies par la configuration des éléments structuraux (13) de la structure électriquement conductrice (12),
dans lequel les positions pouvant être attribuées aux signaux statiques (40) sur le capteur surfacique capacitif (20) peuvent être déviées par une saisie dynamique supplémentaire au moyen d'un moyen de saisie (30), et les signaux statiques (40) peuvent ainsi être convertis en des signaux dynamiques (42),
dans lequel la saisie dynamique supplémentaire est une saisie dynamique sous la forme d'un mouvement et/ou d'un geste avec le moyen de saisie (30) sur ou le long du dispositif (10) sans que le moyen de saisie (30) ne touche la structure électriquement conductrice,
dans lequel le dispositif (10) comprend au moins un bord pour guider le moyen de saisie (30) lors de la réalisation de la saisie dynamique supplémentaire,
dans lequel un signal de saisie dynamique (44) peut être généré par la saisie dynamique supplémentaire sur le capteur surfacique capacitif (20),
dans lequel le signal de saisie dynamique (44) et les signaux dynamiques (42) représentent le signal total variable en fonction du temps (46) qui peut être évalué par un appareil (22) contenant le capteur surfacique capacitif (20), et
dans lequel les éléments structuraux (13) sont linéaires et présentent un angle avec l'orthogonal du bord compris entre 5° et 75°.

10. Dispositif (10) selon la revendication précédente, dans lequel les éléments structuraux (13) présentent une largeur de 0,5 mm à 8 mm, de préférence de 1,5 mm à 5 mm.

11. Dispositif (10) selon la revendication 9 ou 10, dans lequel les éléments structuraux (13) présentent un angle avec l'orthogonale compris entre 10° et 45°.

12. Système pour générer un signal inviolable variable en fonction du temps (46) sur un capteur surfacique capacitif (20), dans lequel le système comprend un dispositif (10) et un appareil (22) avec le capteur capacitif de surface (20),
dans lequel le dispositif (10) présente une structure électriquement conductrice (12) avec des éléments structuraux (13) sur un substrat non conducteur (14), qui sont configurés pour générer une quantité de signaux statiques (40) sur le capteur surfacique capacitif (20) par le placement du dispositif (10) sur le capteur surfacique capacitif (20), dans lequel des positions sur le capteur surfacique (20) sont affectées aux signaux statiques (40), lesquelles positions sont déterminées par la conception des éléments structuraux (13) de la structure électriquement conductrice (12),
dans lequel un signal de saisie dynamique (44) est généré sur le capteur surfacique par l'exécution d'une saisie dynamique sous la forme d'un mouvement et/ou d'un geste avec un moyen de saisie (30) sur ou le long du dispositif (10) sans que le moyen de saisie ne touche la structure électriquement conductrice, et dans lequel un bord du dispositif (10) est utilisé comme guide pour la saisie par le moyen de saisie (30), dans lequel les positions affectées aux signaux statiques (40) sont déviées par la saisie dynamique, et les signaux statiques (40) sont ainsi convertis en signaux dynamiques (42), et
dans lequel le signal de saisie dynamique (44) généré par le moyen de saisie (30) et les signaux dynamiques (42) représentent un signal total variable en fonction du temps (46), lequel est évalué par l'appareil (22) contenant le capteur surfacique capacitif (20).

13. Système selon la revendication précédente, dans lequel le système présente un dispositif de traitement de données qui est agencé pour évaluer le signal total variable en fonction du temps (46), dans lequel un logiciel ('app') est de préférence installé sur le dispositif de traitement de données, lequel comprend des instructions de détermination de valeurs caractéristiques dynamiques du signal total variable en fonction du temps et de comparaison de celles-ci avec des données de référence.

14. Système selon la revendication précédente, dans lequel l'appareil (22) contenant le capteur capacitif (20) traite le signal total variable en fonction du temps (46) comme une quantité d'événements tactiles et le logiciel détermine des valeurs caractéristiques dynamiques de la quantité d'événements tactiles, dans lequel, de préférence, les caractéristiques dynamiques comprennent un début, une fin, des maxima locaux, des minima locaux, des vitesses, des déviations et/ou des amplitudes des événements tactiles.

15. Programme logiciel pour une installation sur un appareil (22) contenant un capteur surfacique capacitif (20), dans lequel le programme logiciel comprend des instructions de détermination des valeurs caractéristiques dynamiques du signal total variable en fonction du temps (46) généré par l'exécution du procédé selon l'une des revendications 1 à 8, et de comparaison avec des données de référence.
